# EUROPÄISCHE PATENTSCHRIFT

(11) **EP 3 512 716 B1**
(45) Veröffentlichungstag und Bekanntmachung des Hinweises auf die Patenterteilung: **01.07.2020**
(21) Anmeldenummer: 17768093.1
(22) Anmeldetag: 13.09.2017
(51) Int. Cl.: B60B 33/02, B62B 3/00, B62B 5/00, B60B 33/00

(54) **ÜBER EIN SCHALTGESTÄNGE ZU BETÄTIGENDE ROLLEN SOWIE VERFAHRWAGEN MIT ZWEI ROLLENPAAREN**
CASTORS OPERATED VIA A SELECTOR LINKAGE, AND MOBILE WAGON HAVING TWO PAIRS OF CASTORS
ROUES À PIVOT À ACTIONNER PAR L'INTERMÉDIAIRE D'UNE TRINGLERIE DE COMMANDE ET CHARIOT MOBILE DOTÉ DE DEUX PAIRES DE ROUES À PIVOT

(30) Priorität: 15.09.2016 DE 102016117347; 30.05.2017 DE 102017111777
(43) Veröffentlichungstag der Anmeldung: 24.07.2019
(73) Patentinhaber: Tente GmbH & Co. KG, 42929 Wermelskirchen (DE)
(72) Erfinder: JUNGHANS, Ingo, 06636 Laucha (DE)
(74) Vertreter: Müller, Enno
(86) Internationale Anmeldenummer: PCT/EP2017/073011
(87) Internationale Veröffentlichungsnummer: WO 2018/050691

(56) Entgegenhaltungen:
- EP-A1- 2 223 846
- EP-A2- 0 618 088
- EP-A2- 2 236 391
- EP-B1- 2 675 416
- DE-A1- 10 150 268
- DE-A1-102013 101 494
- DE-A1-102014 113 460

## Beschreibung

### Gebiet der Technik

Die Erfindung betrifft zunächst über ein Schaltgestänge zu betätigende Rollen, bspw. bei einem Verfahrwagen, wobei ein erstes bremsfeststellbares Rollenpaar und ein zweites Rollenpaar vorgesehen sind, wobei weiter das erste Rollenpaar und das zweite Rollenpaar über eine gemeinsame erste bzw. zweite Schaltstange verbunden sind und auf beide Rollenpaare gesondert voneinander mittels jeweils eine freie Betätigungsfläche aufweisende Betätigungsteile einwirkbar ist und beide Betätigungsflächen im Bereich des ersten Rollenpaares angeordnet sind.

Des Weiteren betrifft die Erfindung einen Verfahrwagen mit zwei Rollenpaaren, von denen das erste Rollenpaar in üblicher Verfahrrichtung des Verfahrwagens vorne und das zweite Rollenpaar hinten angeordnet ist, wobei weiter das erste Rollenpaar als bremsfeststellbares Rollenpaar ausgebildet ist und die bremsfeststellbaren Rollen des ersten Rollenpaares über eine gemeinsame erste Schaltstange und die Rollen des zweiten Rollenpaares über eine gemeinsame zweite Schaltstange verbunden sind, wobei auf beide Rollenpaare gesondert voneinander mittels jeweils eine freie Betätigungsfläche aufweisende Betätigungsteile einwirkbar ist und wobei weiter beide Betätigungsflächen im Bereich des ersten Rollenpaares angeordnet sind.

### Stand der Technik

Derartige Rollen, insbesondere zur Anordnung an Verfahrwagen, bzw. Verfahrwagen mit solchen in Paaren angeordneten Rollen sind bekannt. Derartige Verfahrwagen sind auch als Werkstattwagen bekannt und werden vornehmlich mittels eines Zugfahrzeuges über längere Strecken bewegt.

Bei solchen Verfahrwagen besteht das Bedürfnis, diese zum einen leicht rangieren zu können, bspw. um diese in eine sich zwischen anderen Verfahrwagen ergebende Bucht o. dgl. einzuschieben, und zum anderen eine günstige Verfahrbarkeit des Verfahrwagens anzubieten, im Falle dass dieser bspw. von einem Zugfahrzeug in Form eines Anhängers gezogen wird.

Hierbei besteht weiter das Bedürfnis für die unterschiedlichen Nutzungssituationen des Verfahrwagens auf die Eigenschaften einer oder aller Rollen einzuwirken. Die Rollen können mit einer auslösbaren Bremse ausgestattet sein. Darüber hinaus können die Rollen als sogenannte Bockrollen oder Lenkrollen ausgebildet sein oder auch als Lenkrollen, bei denen eine Bockrollenfunktion einstellbar ist.

Aus der EP 2 236 391 A2 sind über ein Schaltgestänge zu betätigende Rollen bzw. ein Verfahrwagen bekannt, bei welchem das zweite Rollenpaar aus Bockrollen gebildet ist, die in einer Verfahrrichtung gesehen zwischen einem ersten und dritten Rollenpaar, die beide als Lenkrollen ausgebildet sind, angeordnet ist. Um eine geeignete Manövrierfähigkeit zu erreichen, muss das zweite Rollenpaar, die Bockrollen, in einem angehobenen Zustand versetzt werden.

Im Weiteren ist zum Stand der Technik noch auf die DE 10 2014 113 460 A1 und die EP 618 088 A2 zu verweisen.

### Zusammenfassung der Erfindung

Ausgehend von einem Stand der Technik gemäß der EP 2 236 391 A2 beschäftigt sich die Erfindung mit der Aufgabenstellung, betätigbare Rollen bzw. einen Verfahrwagen mit Rollenpaaren in handhabungsgünstiger Weise weiter zu verbessern.

Diese Aufgabe ist zunächst beim Gegenstand des Anspruches 1 gelöst, wobei darauf abgestellt ist, dass die Rollen des zweiten Rollenpaares bei in üblichem Gebrauchszustand um eine vertikale Schwenkachse schwenkbarer Anordnung hinsichtlich einer Laufrichtung feststellbar sind und dass die Einwirkung auf das erste und zweite Rollenpaar über die Betätigungsflächen zugleich und nur im Sinne einer Aufhebung der Bremsfeststellung des ersten Rollenpaares und einer Auslösung der Richtungsfeststellung des zweiten Rollenpaares durchführbar ist.

Diese Aufgabe ist hinsichtlich des Verfahrwagens beim Gegenstand des Anspruches 20 gelöst, wobei ebenfalls darauf abgestellt, dass die Rollen des zweiten Rollenpaares bei in üblichem Gebrauchszustand um eine vertikale Schwenkachse schwenkbarer Anordnung als hinsichtlich einer Laufrichtung feststellbare Rollen ausgebildet sind, dass der Verfahrwagen eine gelenkig an dem Verfahrwagen angeordnete Verbindungsstange, zur Ankopplung etwa an einen Zugwagen, aufweist, dass die Verbindungsstange um eine Drehachse zwischen einer abgesenkten und einer hochgeschwenkten Stellung bewegbar ist und dass mit einem Absenken der Verbindungsstange in die Ankoppelstellung die Bremsfeststellung des ersten Rollenpaares aufgehoben und die Laufrichtung des zweiten Rollenpaares festgestellt ist.

Zufolge der vorgeschlagenen Ausgestaltung ist eine handhabungsgünstige Einwirkung auf die Rollenpaare erreichbar. Die Rollen des in üblicher Laufrichtung vorderen Rollenpaares sind über eine bevorzugt quer zur üblichen Laufrichtung sich erstreckende Schaltstange miteinander verbunden, zur Einwirkung auf entsprechende Eingerichte der Rollen zumindest dieses Rollenpaares. Ebenso sind die Rollen des bezüglich der Laufrichtung hinteren Rollenpaares zur Einwirkung auf deren Eingerichte über eine (weitere) Schaltstange verbunden.

Auf beide Rollenpaare kann gesondert, d.h. getrennt voneinander mittels jeweils eines Betätigungsteils eingewirkt werden. Die Betätigungsteile sind hierbei so ausgebildet und angeordnet, dass diese im Bereich des ersten Rollenpaares, entsprechend bevorzugt im in üblicher Verfahrrichtung vorderen Bereich des Verfahrwagens zur Betätigung freiliegen. Hierzu sind entsprechende Betätigungsflächen ausgebildet. Auf diese Betätigungsflächen kann unmittelbar oder auch mittelbar zur Aktivierung und/oder Aufhebung einer Rollenfunktion, wie bspw. Bremsfeststellung und/oder Laufrichtungsfeststellung, eingewirkt werden. Auch können die Betätigungsteile beider Rollenpaare bewegungsgekoppelt sein.

Es ergibt sich so für den Benutzer eine günstige Handhabung zur Einwirkung auf die Rollenpaare.

In einer möglichen Ausbildung kann vorgesehen sein, dass eine Betätigungsfläche an einem freien Ende eines Hebels ausgebildet ist. Dieser Hebel kann an einer Schaltstange angeordnet sein, wobei in diesem Fall die Schaltstange eine Schwenkachse für den zu betätigenden Hebel bilden kann. Auch kann die geometrische Schwenkachse für einen solchen Hebel außerhalb der Schaltstange liegen.

Auch kann eine Betätigungsfläche an einem freien Ende eines Verschiebeteiles ausgebildet sein. Das Verschiebeteil kann Teil eines Schaltgestänges sein, welches sich in einer Verstecktlage, bspw. bodenunterseitig des Verfahrwagens, erstrecken kann. Das Verschiebeteil kann weiter stangenartig ausgebildet sein mit einem freien Ende, das die Betätigungsfläche im Bereich des ersten Rollenpaares ausbildet und einem hierzu abgewandten Endbereich, der unmittelbar oder mittelbar auf die diesbezügliche Schaltstange oder auf einen an dieser Schaltstange angeordneten oder mit der Schaltstange zusammenwirkenden Hebel einwirkt.

Die Einwirkung auf das zweite Rollenpaar, bevorzugt das in üblicher Verfahrrichtung hintere Rollenpaar, kann über ein Übertragungsgestänge erfolgen. Im Falle einer solchen Ausbildung ist das vorbezeichnete Verschiebeteil durch die Mittel des Übertragungsgestänges gebildet. Es kann sich hierbei um ein mehrteiliges Übertragungsgestänge handeln, ggf. mit Umlenk-/Übersetzungsbereichen.

Die Schaltstange des zweiten Rollenpaares kann einen Betätigungshebel aufweisen, auf welchen durch ein freies Ende des Übertragungsgestänges einwirkbar ist. Der Betätigungshebel kann, wie bevorzugt, drehfest mit der Schaltstange verbunden sein, wobei die Schaltstange in einer möglichen Ausbildung die Schwenkachse für den Betätigungshebel bilden kann. Die Einwirkung des Übertragungsgestänges zufolge einer im Wesentlichen linearen Verlagerung eines diesbezüglichen Verschiebeteiles bewirkt zufolge Einwirkung auf den Betätigungshebel eine Drehbewegung der diesbezüglichen Schaltstange des zweiten Rollenpaares.

Die Einwirkung auf das erste und zweite Rollenpaar ist über die Betätigungsflächen kann nur im Sinne einer Aufhebung der Bremsfeststellung des ersten Rollenpaars und einer Auslösung der Richtungsfeststellung des zweiten Rollenpaares durchführbar. Die Aufhebung der Bremsfeststellung des ersten Rollenpaares und die Auslösung der Richtungsfeststellung des zweiten Rollenpaares erfolgt zugleich, d.h. durch einen Betätigungsvorgang des Benutzers. Durch Auslösung der Richtungsfeststellung des zweiten Rollenpaares werden die Rollen dieses Rollenpaares in eine sogenannte Bockrollenstellung festgestellt, in welcher bevorzugt keine Verschwenkung der Rolle um eine Vertikalachse möglich ist. Die aufgehobene Bremsfeststellung des in Verfahrrichtung vorderen Rollenpaares und die Bockrollen-Feststellung des hinteren Rollenpaares ist die bevorzugte Verfahrstellung des Verfahrwagens im Anhängerbetrieb.

Zum Rangieren, insbesondere von Hand, kann eine Rolleneinstellung bevorzugt sein, bei welcher ebenfalls die Bremsfeststellung aufgehoben ist, jedoch bezüglich der Rollen des zweiten Rollenpaares eine freie Verschwenkbarkeit zur Nutzung dieser Rollen als Schwenkrollen gegeben ist.

Die in üblicher Verfahrrichtung vorderen Rollen des ersten Rollenpaares, die auch als Schwenkrollen ausgebildet sein können, wie auch in einer möglichen Ausgestaltung die Rollen des hinteren, zweiten Rollenpaares, können über eine Bremseinrichtung verfügen.

Auch kann vorgesehen sein, dass über die Betätigungsteile die Bremsfeststellung wieder aktiviert und/oder die Richtungsfeststellung des ersten und/oder zweiten Rollenpaares wieder eingenommen wird.

Zusätzlich zu den Betätigungsflächen kann eine Betätigungseinrichtung, bspw. zur Fußbetätigung, vorgesehen sein, die auf eine oder beide Rollen des ersten und/oder zweiten Rollenpaares einwirkt. Die Betätigungseinrichtung kann hierbei unmittelbar an der Rolle vorgesehen sein, bspw. zur Auslösung der Bremsfeststellung und/oder Richtungsfeststellung der Rolle, ggf. auch zur Aufhebung derselben. Auch kann die ggf. fußbetätigbare Betätigungseinrichtung entfernt zu einer oder beiden Rollen eines Rollenpaares angeordnet sein, zur entsprechenden Ferneinwirkung auf die Rollen eines Rollenpaares.

So kann weiter die Betätigungseinrichtung zur zusätzlichen Einwirkung auf das zweite Rollenpaar ein Fußhebel sein. Dieser Fußhebel ist ergonomisch günstig zur Fußbetätigung angeordnet, so bspw. zugeordnet dem Bodenbereich des Verfahrwagens.

Der Fußhebel kann zur Zusammenwirkung mit dem Übertragungsgestänge ausgebildet sein, zur entsprechenden Einwirkung auf das zweite Rollenpaar. Auch kann diesbezüglich ein entsprechendes Verschiebeteil zwischen Fußhebel und Schaltstange des zweiten Rollenpaares angeordnet sein.

Über den Fußhebel kann bspw. auf das zweite Rollenpaar derart eingewirkt werden, dass die Richtungsfeststellung der Rollen dieses zweiten Rollenpaares wieder aufgehoben wird. Alternativ oder auch kombinativ hierzu kann über den Fußhebel auch die Richtungsfeststellung der Rollen des zweiten Rollenpaares ausgelöst werden. Auch kann der Fußhebel zur Einwirkung auf die Rollen des ersten Rollenpaares dienen, ggf. zur Einwirkung auf alle Rollen beider Rollenpaare.

In einer weiteren möglichen Ausgestaltung kann auf das Übertragungsgestänge mittelbar oder unmittelbar mittels einer Feder zur Beaufschlagung des Übertragungsgestänges in zumindest eine Bewegungsendstellung eingewirkt sein. Die Verlagerung des Übertragungsgestänges beziehungsweise dessen Komponenten aus der Bewegungsendstellung heraus, in welcher die Feder einwirkt, ist entsprechend nur unter Überwindung der einwirkenden Federkraft möglich. Die Federkraft kann hierbei so eingestellt sein, dass diese nur willensbetont zufolge entsprechender Einwirkung, beispielsweise Hebeleinwirkung, überwunden werden kann. Hierdurch ist weiter sichergestellt, dass die so federunterstützte Bewegungsendstellung nicht beispielsweise durch Erschütterungen im Zuge der Rollenbewegung aufgehoben wird.

In bevorzugter Ausgestaltung sind alle möglichen hier bevorzugt zwei möglichen Bewegungsendstellungen des Übertragungsgestänges federbelastet. Hierzu ist in bevorzugter Ausgestaltung nur eine Feder vorgesehen.

Bei der Feder kann es sich um eine übliche Druck- oder Zugfeder handeln, die allein mechanisch einwirkt. Bevorzugt wird hingegen eine Ausgestaltung, bei welcher die Feder eine Gasdruckfeder ist.

Eine solche Gasdruckfeder kann einerends an dem Übertragungsgestänge und anderenends an einem Fahrgestell des Verfahrwagens angelenkt sein. Der Anlenkpunkt am Fahrgestell bildet den Fixpunkt.

Das Übertragungsgestänge kann zwei im Wesentlichen in Längsrichtung des Übertragungsgestänges angeordnete Übertragungsstangen aufweisen, die über einen Kopplungshebel verbunden sind. Über diese Übertragungsstangen und den Kopplungshebel kann bei Beaufschlagung der diesbezüglichen Betätigungsfläche im Bereich des ersten Rollenpaares eine schaltende Drehbewegung der Schaltstange des zweiten Rollenpaares ausgelöst werden.

Mit der Betätigungseinrichtung für das zweite Rollenpaar, bspw. dem Fußhebel, kann auf den Kopplungshebel des Übertragungsgestänges eingewirkt werden. So kann der Kopplungshebel um eine quer zur üblichen Verfahrrichtung ausgerichtete Achse schwenkbar gehaltert sein, wobei die Betätigungseinrichtung bspw. in Art eines Fußhebels drehfest mit der Achse und dem Kopplungshebel verbunden sein kann.

Durch Betätigung des Fußhebels kann eine Bewegung des Übertragungsgestänges in die eine oder auch andere Richtung durchgeführt werden, entsprechend bevorzugt eine Verlagerung der Schaltstange in die Auslösestellung und aus dieser heraus in die Aufhebestellung.

Der Verfahrwagen kann eine gelenkig an dem Verfahrwagen angeordnete Verbindungsstange, zur Ankopplung etwa an einem Zugwagen, aufweisen. Die Verbindungsstange kann in Art einer schwenkbaren Deichsel vorgesehen sein.

So kann weiter die Verbindungsstange zwischen einer abgesenkten und einer hochgeschwenkten Stellung bewegbar sein. Die geometrische Schwenkachse erstreckt sich bevorzugt quergerichtet zur üblichen Verfahrrichtung. In der hochgeschwenkten Stellung erstreckt sich die Verbindungsstange bevorzugt in einer an einer Vertikalen orientierten Ebene. In der abgesenkten Stellung kann sich die Verbindungsstange etwa horizontal, ggf. einen spitzen Winkel von bis zu 30° zu einer Horizontalebene einschließend erstrecken.

Die Verbindungsstange kann, wie auch bevorzugt, zur Einwirkung auf eine oder beide Betätigungsflächen im Zuge einer Bewegung der Verbindungsstange aus der hochgeschwenkten Stellung heraus in die abgesenkte Stellung ausgebildet sein. So kann im Zuge der Schwenkverlagerung der Verbindungsstange aus der hochgeschwenkten Stellung in die abgesenkte Stellung, die der Zugstellung des Verfahrwagens entspricht, eine Aufhebung der Bremsfeststellung des in Verfahrrichtung ersten Rollenpaares und/oder eine Auslösung der Richtungsfeststellung des zweiten Rollenpaares durchgeführt werden. Die Verbindungsstange kann auf das erste Rollenpaar über den an dem diesbezüglichen Schaltgestänge angeordneten Hebel einwirken und auf das in Verfahrrichtung hintere, zweite Rollenpaar bevorzugt über das Übertragungsgestänge und die diesbezügliche Schaltstange. Bevorzugt geht bei einem Abschwenken der Verbindungsstange in die Ankoppelstellung eine Aufhebung der Bremsfeststellung des ersten Rollenpaares einher mit einer Feststellung der Schwenkrichtung des zweiten Rollenpaares.

Die Verbindungsstange kann in ihre hochgeschwenkte Stellung mittels einer Gasdruckfeder vorgespannt sein. Hierdurch ist sichergestellt, dass eine abgeschwenkte Verbindungsstange, beispielsweise nach einem Abhängen von einem Zugfahrzeug, selbsttätig zurück in die hochgeschwenkte Stellung verlagert wird. Diese Schwenkverlagerung erfolgt stets über einen vorgegebenen Schwenkwinkel, so dass sich in der hochgeschwenkten Stellung eine etwa senkrechte Ausrichtung zu dem Umgebungsboden ergibt.

Durch Anordnung einer Gasdruckfeder ist in vorteilhafter Weise eine bewegungsgedämpfte Schwenkverlagerung der Verbindungsstange ermöglicht.

Die Gasdruckfeder kann einerseits an einem Fahrgestell des Verfahrwagens und andererseits an der Verbindungsstange angelenkt sein. Der Anlenkpunkt am Fahrgestell bietet den fixen Abstützpunkt für die Gasdruckfeder.

Die Anlenkung an der Verbindungsstange kann gemäß einem Ausführungsbeispiel an einem bezüglich der Drehachse der Verbindungsstange gegenüberliegenden Hebelfortsatz erfolgen. Auf diesen Hebelfortsatz wirkt die Gasdruckfeder drückend ein. Der Hebelfortsatz kann ein Teil des Beaufschlagungsvorsprunges der Verbindungsstange sein.

Das Hochschwenken der Verbindungsstange in eine Parkstellung kann in einer möglichen Ausgestaltung keine Schaltwirkung auf eines oder beide Rollenpaare auslösen. Vielmehr ist zur Bremsfeststellung in einer möglichen Ausgestaltung eine übliche Betätigung, bspw. Fußbetätigung, nötig, weiter bspw. unmittelbar an der jeweiligen Rolle oder über ein auf die diesbezügliche Schaltstange einwirkendes Mittel. Eine Aufhebung der Richtungsfeststellung der in Verfahrrichtung hinteren Rollen, bspw. um ein handhabungsgünstiges Rangieren zu ermöglichen, kann durch Betätigung des auf das Übertragungsgestänge einwirkenden Fußhebels durchgeführt werden. Möglich ist diesbezüglich auch eine gelenkartige Verbindung von Verbindungsstange und Übertragungsgestänge, so dass mit einem Hochschwenken der Verbindungsstange über das Übertragungsgestänge auch auf das hintere Rollenpaar Einfluss genommen werden kann, bspw. zur Aufhebung der Bockrollenstellung.

Die Betätigungseinrichtung kann bspw. im Bereich des Fahrgestells des Verfahrwagens vorgesehen sein, bspw. zur Beeinflussung beider Rollen eines Rollenpaares, so weiter bspw. des in Verfahrrichtung betrachteten hinteren Rollenpaares, hier insbesondere hinsichtlich der Verschwenkbarkeit.

Darüber hinaus kann die Betätigungseinrichtung unmittelbar an der Rolle ausgebildet sein, zur Auslösung und/oder Aufhebung der Bremsfeststellung und/oder der Richtungsfeststellung der Rolle. Hierbei kann es sich um für derartige Rollen übliche Betätigungseinrichtungen handeln, insbesondere Hand- oder, wie weiter bevorzugt, fußbetätigbare Betätigungseinrichtungen.

So ist in einer bevorzugten Ausgestaltung vorgesehen, dass die Betätigungseinrichtung ein fußbetätigbarer Hebel mit einem zur Fußbetätigung frei abragenden Hebelarm ist, wobei die Betätigungseinrichtung bei Ausbildung der Rolle als um eine vertikale Schwenkachse schwenkbare Rolle relativ zu dem Laufrad der Rolle, bezogen auf die Verschwenkbarkeit, feststehend ist. Entsprechend befindet sich die unmittelbar an der Rolle ausgebildete Betätigungseinrichtung in bevorzugter Ausgestaltung stets in einer vorgegebenen und gleichbleibenden Ausrichtung relativ zu dem Fahrgestell des Verfahrwagens. Dies bietet die Möglichkeit einer günstigen Beaufschlagung der Betätigungseinrichtungen der Rollen, insbesondere der gleichzeitigen Betätigung der Betätigungseinrichtungen eines Rollenpaares, bspw. über eine Schaltstange.

Die Schaltstange kann drehfest mit der an der Rolle ausgebildeten Betätigungseinrichtung verbunden sein, dies weiter bspw. unter Bildung der Schwenkachse der hebelartigen Betätigungseinrichtung. Die Schaltstange kann hierbei entsprechend den Achskörper der hebelartigen Betätigungseinrichtung unmittelbar ausbilden. Eine Drehverlagerung der Schaltstange um ihre geometrische Längsachse führt zu einer entsprechenden Schwenkverlagerung der Betätigungseinrichtung.

In einer Weiterbildung kann die Schaltstange unmittelbar auf den Hebelarm der Betätigungseinrichtung einwirken, so weiter bspw. auf den auch zur Fußbetätigung dienenden Abschnitt der Betätigungseinrichtung. Zufolge entsprechender Beaufschlagung des Hebelarms der Betätigungseinrichtung über die Schaltstange wird der Hebelarm um die Schwenkachse der Betätigungseinrichtung aus der einen Stellung heraus in die andere Stellung verlagert. Die Schaltstange kann hierzu beispielsweise drückend und/oder ziehend auf den Hebelarm der Betätigungseinrichtung einwirken.

In diesem Zusammenhang kann es vorteilhaft sein, den Hebelarm mit der Schaltstange über eine Klemmung zu verbinden. So kann die Schaltstange so ausgebildet sein bzw. mit solchen Mitteln versehen sein, dass sowohl die auch zur Fußbetätigung üblicherweise freiliegende Fläche der Betätigungseinrichtung als auch die von dieser Fläche abweisende Unterseite der Betätigungseinrichtung erfasst ist.

So kann in einer möglichen Ausgestaltung die Schaltstange als Vierkantrohr ausgebildet sein, das zumindest zugeordnet den Bereichen der Betätigungseinrichtungen eines Rollenpaares geschlitzt ist, durch welchen Schlitz bspw. der Hebelarm der Betätigungseinrichtung greift. Auch kann die Schaltstange insgesamt aus zwei, im zusammengesetzten Zustand im Wesentlichen ein Vierkantrohr bildenden, im Querschnitt U-förmigen Profilen bestehen, deren U-Öffnungen im Querschnitt aufeinander zu weisen können. Zwischen diesen U-Profilen können die Hebelarme der Betätigungseinrichtungen geklemmt sein.

Die Klemmverbindung kann gegeben und gesichert sein, bspw. zufolge entsprechender Verschraubung. Auch kann in diesem Zusammenhang eine Justiermöglichkeit gegeben sein.

Darüber hinaus kann an dem Verfahrwagen, insbesondere bei einem solchen zum Transport von Schwerlasten, zusätzlich zu den vorbeschriebenen Rollen eine motorisch angetriebene Rolle angeordnet sein. Eine solche motorisch angetriebene Rolle erleichtert dem Benutzer das weitere Rangieren des Verfahrwagens beispielsweise nach einem Abkoppeln von dem Zugfahrzeug. Die motorisch angetriebene Rolle kann in einer Ausgestaltung gleichgerichtet den nicht angetriebenen Rollen des Verfahrwagens ausgerichtet sein. Diesbezüglich ist aber auch eine Querausrichtung möglich, beispielsweise zur Nutzung der motorisch angetriebenen Rolle, um den Verfahrwagen in eine Parkposition zu verbringen.

Bevorzugt ist diesbezüglich eine elektromotorisch angetriebene Rolle, wie diese beispielsweise aus der EP 2 675 416 B1 (US 8,978,795 B2) bekannt ist.

So ist weiter bevorzugt vorgesehen, dass die motorisch angetriebene Rolle anhebbar ist, dies unter Aufhebung des Bodenkontakts der Rolle. Entsprechend ist die Rolle auch aus dieser angehobenen Stellung in eine Bodenkontaktstellung absenkbar.

In weiterer Ausgestaltung verfügt der Verfahrwagen über eine Sensorik, um den elektrischen Antrieb der motorisch angetriebenen Rolle zu aktivieren beziehungsweise deaktivieren. Zudem ist über dieselbe Sensorik, gegebenenfalls über eine weitere Sensorik, gewährleistet, dass mit Absenken der Verbindungsstange, zum Anhängen des Verfahrwagens beispielsweise an einen Zugwagen, die motorisch angetriebene Rolle selbsttätig in ihre angehobene Stellung verfährt.

### Kurze Beschreibung der Zeichnungen

Nachstehend ist die Erfindung anhand der beigefügten Zeichnung, die lediglich Ausführungsbeispiele darstellt, näher erläutert. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Auf der Zeichnung zeigt:
- Fig. 1: einen Ausschnitt eines Verfahrwagens mit über ein Schaltgestänge zu betätigenden Rollen, betreffend eine erste Ausführungsform;

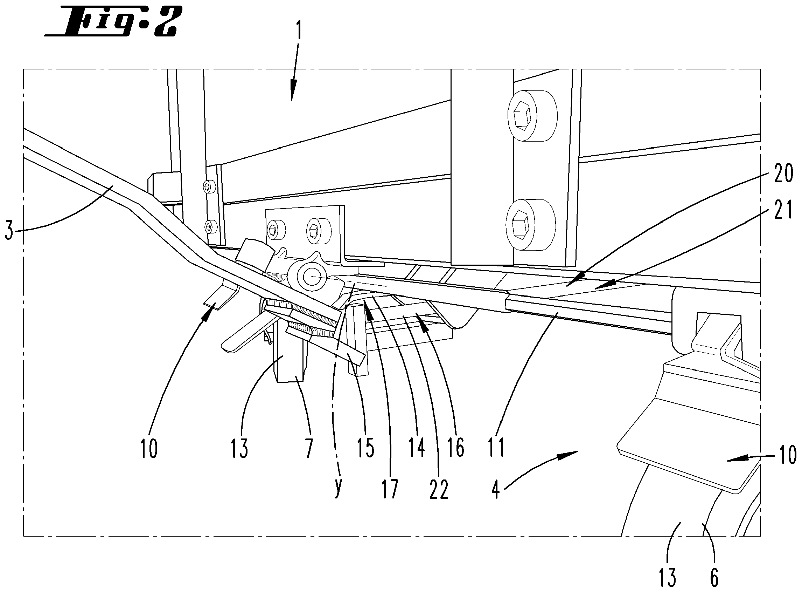

- Fig. 2: eine perspektivische Ausschnittdarstellung, betreffend den Bereich zur Beaufschlagung von auf die Rollen einwirkender Betätigungsteile mittels einer Verbindungsstange;

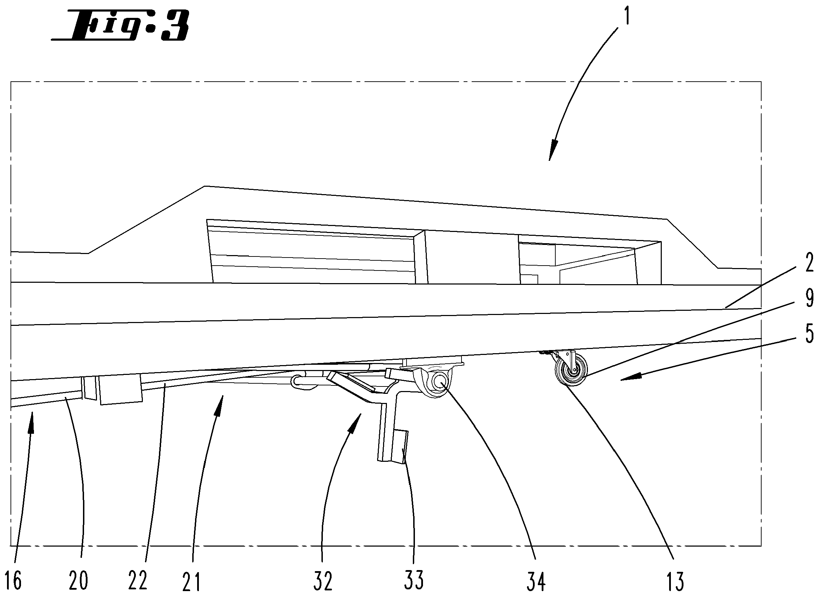

- Fig. 3: eine weitere perspektivische Detaildarstellung, betreffend den Bereich einer fußbetätigbaren Betätigungseinrichtung;

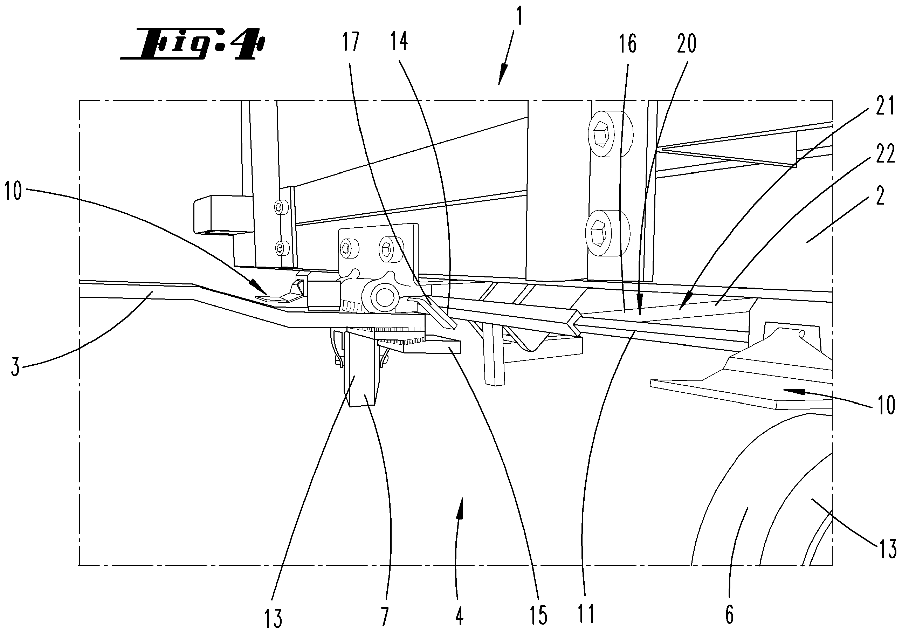

- Fig. 4: eine der Figur 2 entsprechende Darstellung, jedoch eine abgesenkte Stellung der Verbindungsstange betreffend;

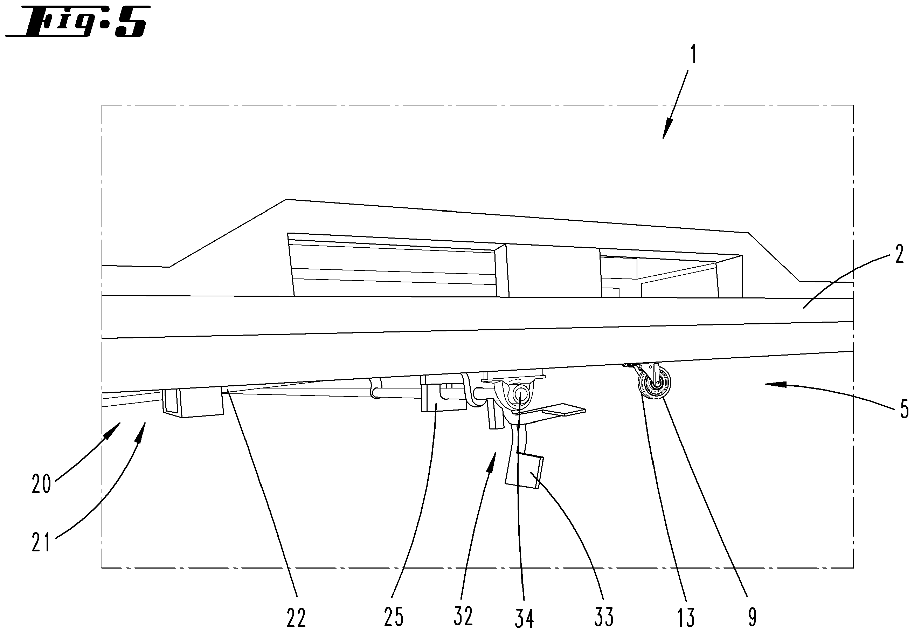

- Fig. 5: eine der Figur 3 entsprechende Darstellung, betreffend die Stellung nach Verlagerung der Verbindungsstange gemäß Figur 4;

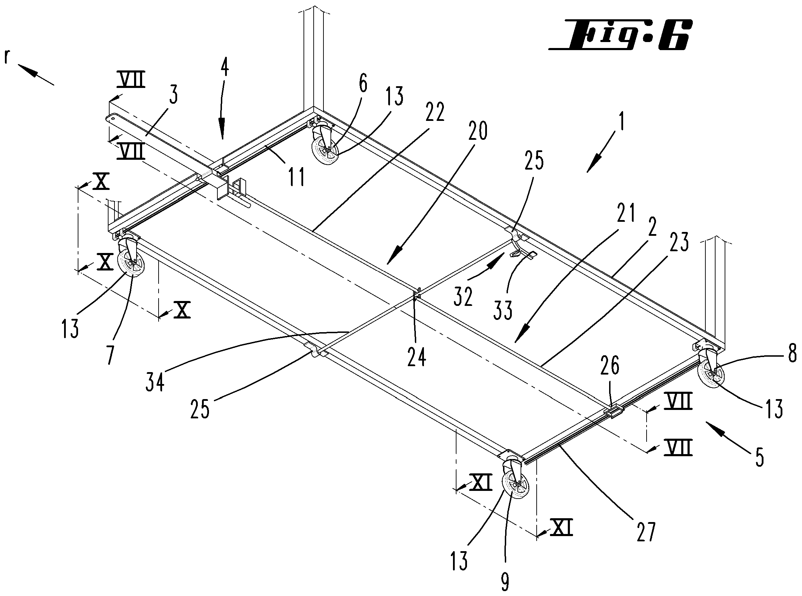

- Fig. 6: eine perspektivische Unteransicht auf ein Verfahrgestell des Verfahrwagens mit angeordneten Rollen und einem Übertragungsgestänge;

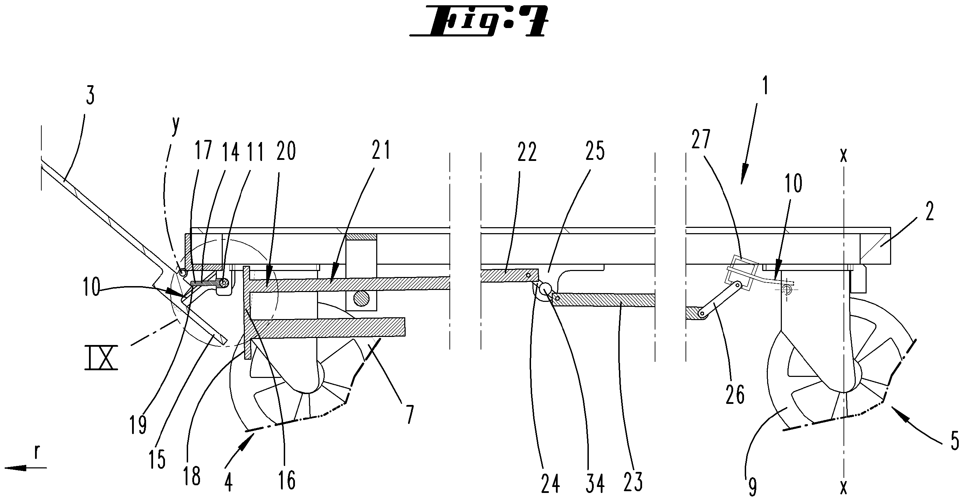

- Fig. 7: den Schnitt gemäß der Ebene VII in Figur 6, die hochgeschwenkte Stellung der Verbindungsstange betreffend;

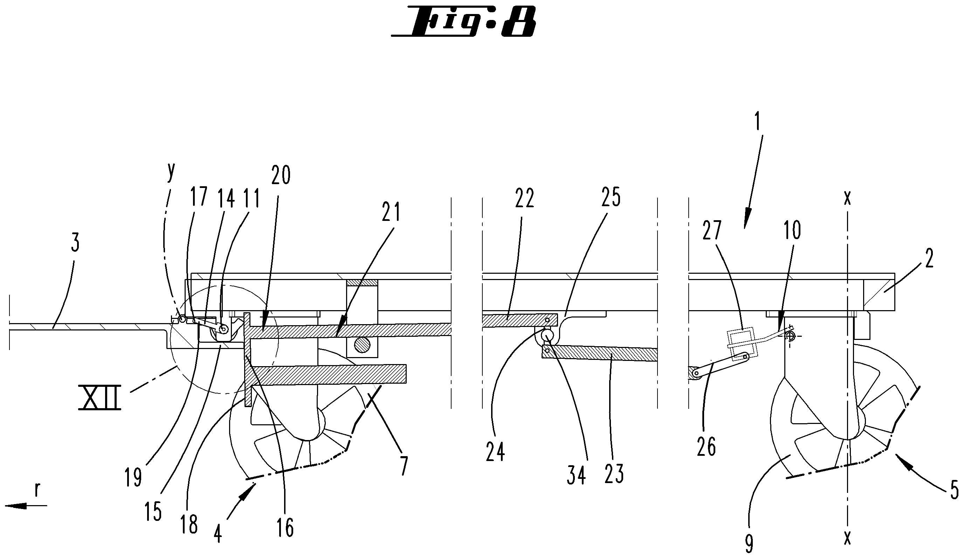

- Fig. 8: eine der Figur 7 entsprechende Darstellung, die abgesenkte Stellung der Verbindungsstange betreffend;
- Fig. 9: die Herausvergrößerung des Bereiches IX in Figur 7;
- Fig. 10: den Schnitt gemäß dem Bereich X in Figur 6;
- Fig. 11: den Schnitt gemäß dem Bereich XI in Figur 6;
- Fig. 12: die Herausvergrößerung des Bereiches XII in Figur 8;
- Fig. 13: eine der Figur 10 entsprechende Schnittdarstellung, jedoch die aufgehobene Bremsfeststellung der Rolle nach Verlagerung der Verbindungsstange in die abgesenkte Stellung betreffend;
- Fig. 14: eine der Figur 11 entsprechende Darstellung, nach Auslösung der Richtungsfeststellung infolge der Absenkung der Verbindungsstange gemäß Figur 12;
- Fig. 15: eine schematische Funktionsdarstellung der Richtungsfeststellung;
- Fig. 16: eine der Figur 6 entsprechende Darstellung, betreffend eine zweite Ausführungsform;
- Fig. 17: eine Detailansicht betreffend die Anordnung einer Gasdruckfeder zur Beaufschlagung des Übertragungsgestänges;

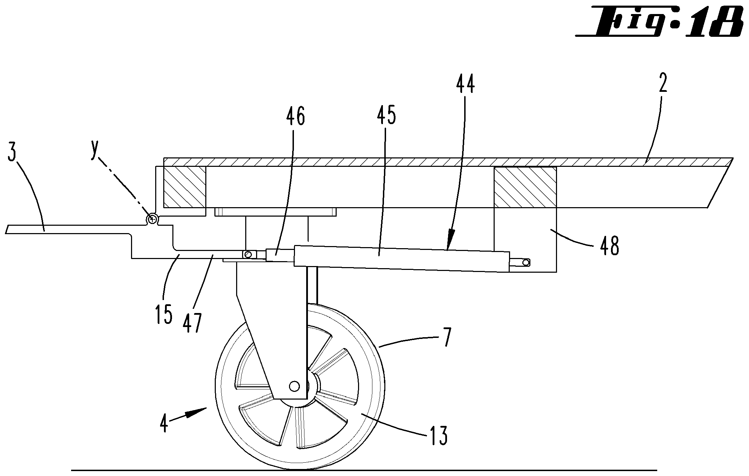

- Fig. 18: eine Detailansicht des Anlenkbereichs der Verbindungsstange mit auf die Verbindungsstange einwirkender Gasdruckfeder, betreffend die abgesenkte Nutzungsstellung der Verbindungsstange;

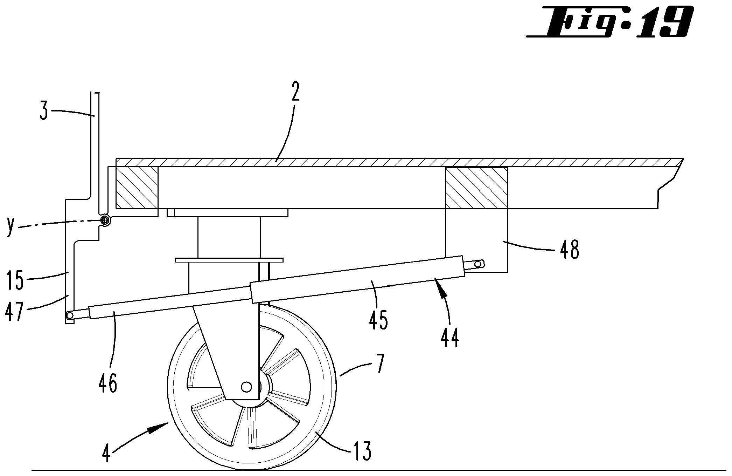

- Fig. 19: eine der Figur 18 entsprechende Darstellung, jedoch die hochgeschwenkte Stellung der Verbindungsstange betreffend;
- Fig. 20: eine Detailansicht betreffend die Anordnung einer optional vorgesehenen, motorisch betriebenen Rolle.

### Beschreibung der Ausführungsformen

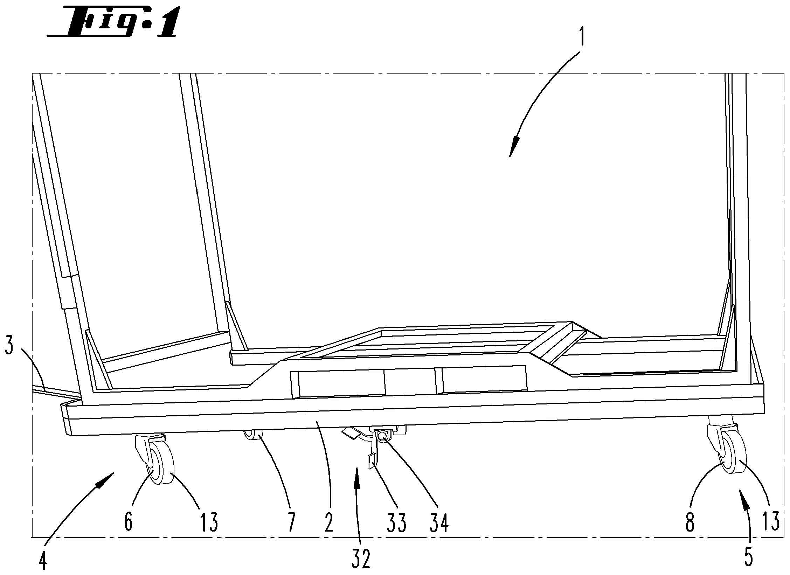

Dargestellt und beschrieben ist, zunächst mit Bezug zu Figur 1, ein Verfahrwagen 1 mit einem Fahrgestell 2 und einer als Deichsel ausgebildeten Verbindungsstange 3.

Das Fahrgestell 2 und somit der gesamte Verfahrwagen 1 stützt sich über zwei Rollenpaare 4, 5 und somit entsprechend über insgesamt vier Rollen 6 bis 9 auf dem Boden ab.

Die Rollen 6 bis 9 können unterseitig an dem Fahrgestell 2 steckgehaltert sein und um eine im üblichen Gebrauchszustand vertikale Schwenkachse x schwenkbar angeordnet sein.

Die in üblicher Verfahrrichtung r vorderen Rollen 6 und 7 des ersten, vorderen Rollenpaars 4 sind zur Bremsfeststellung mit einer fußbetätigbaren Betätigungseinrichtung 10 in Form eines Hebels 36 mit einem Hebelarm 35 versehen, die um eine parallel zur Laufradachse ausgerichtete Schwenkachse z schwenkbeweglich an der Rolle gehaltert ist. Die körperliche Achse ist durch eine drehfest mit dem Hebel 36 verbundene Schaltstange 11 gegeben. Diese erstreckt sich bevorzugt quergerichtet zur üblichen Verfahrrichtung r. Die geometrische Längsachse der Schaltstange 11 bildet die Schwenkachse für bevorzugt beide Betätigungseinrichtungen 10 der Rollen 6 und 7 des vorderen Rollenpaares 4 zur jeweiligen Einwirkung auf eine Bremseinrichtung 12.

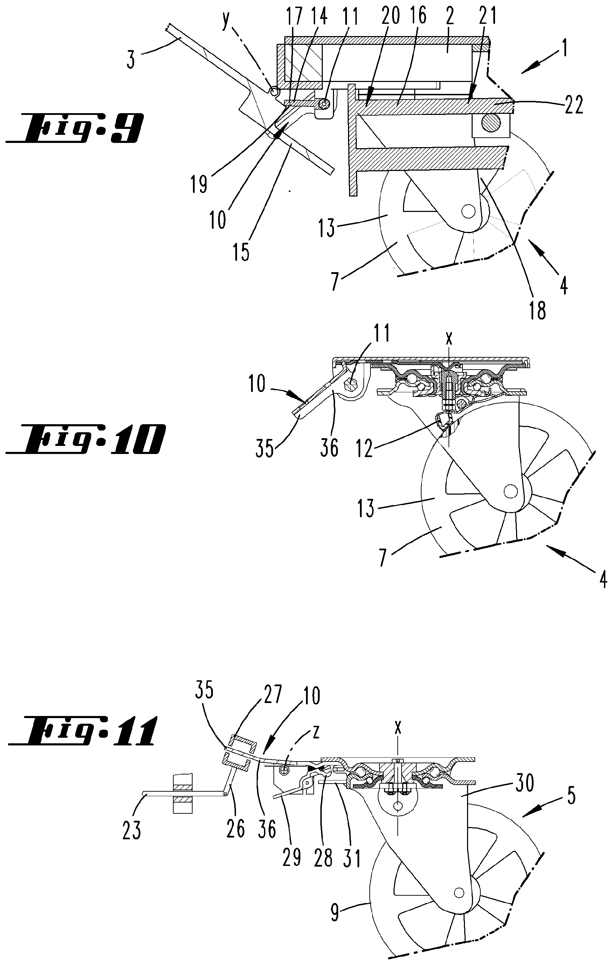

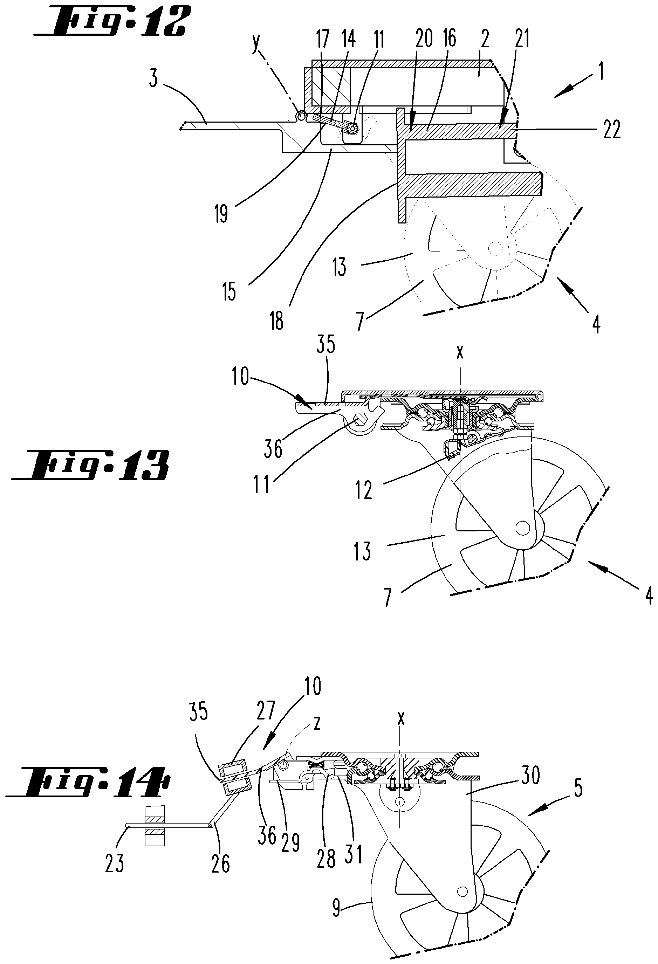

Die hebelartigen Betätigungseinrichtungen 10 sind schwenkbeweglich mit der Schaltstange 11 verbunden, so dass eine Drehung der Schaltstange 11 um ihre geometrische Achse und somit zur Verschwenkachse z zu einer Verschwenkung der Betätigungseinrichtung 10 führt (vgl. Figuren 10 und 13). Die Bremseinrichtung 12 wirkt drehhindernd auf die Lauffläche des Laufrades 13 der Rolle 6 bzw. 7 ein.

Die Rollen 6 und 7 des vorderen Rollenpaares 4 sind darüber hinaus um eine im üblichen Nutzungszustand vertikale Schwenkachse x schwenkbar. Die Betätigungseinrichtung 10, hier insbesondere der Hebel 36, ist jeweils in einem fest mit dem Fahrgestell 2 verbundenen Abschnitt der Rollenhalterung insgesamt angeordnet, so dass unabhängig von der Schwenkstellung des Laufrades 13 der Hebel 36 in seiner vorgegebenen Ausrichtung bleibt. Dies erlaubt die starre Verbindung beider Hebel 36 über die starre Schaltstange 11.

Die Verschwenkbarkeit der vorderen Rollen 6 und 7 kann über ein entsprechendes Eingerichte in der Rolle unterbunden werden.

So kann weiter einhergehend mit einer Aktivierung der Bremseinrichtung 12 auch eine Aktivierung einer Schwenkhinderung über die Betätigungseinrichtung 10 erreicht werden. Entsprechend kann über die Schaltstange 11 eine Totalfeststellung bzw. eine Totalfreigabestellung der vorderen Rollen 6 und 7 erfolgen.

Die die Betätigungseinrichtungen 10 bzw. insgesamt die Bremseinrichtungen 12 der beiden Rollen 6 und 7 des vorderen Rollenpaares 4 verbindende Schaltstange 11 weist etwa mittig ihrer Längserstreckung einen etwa in Radialrichtung zu der geometrischen Drehachse der Schaltstange 11 über deren Umfangslinie frei abragenden Hebel 14 auf. Dieser Hebel 14 ist drehfest mit der Schaltstange 11 verbunden und liegt in der dargestellten Ausführungsform an einer zugewandten Fläche der Verbindungsstange 3 an.

Die geometrische Drehachse y der Anlenkung der Verbindungsstange 3 ist in dem dargestellten Ausführungsbeispiel in Verfahrrichtung r und vertikal nach oben versetzt angeordnet zu der geometrischen Drehachse der Schaltstange 11. Die Absenkung der Verbindungsstange 3 aus einer hochgeschwenkten Stellung gemäß Figur 9 in eine abgesenkte Stellung gemäß Figur 12, in welcher abgesenkten Stellung mittels der Verbindungsstange 3 das Anhängen des Verfahrwagens 1 an einem Zugfahrzeug oder dergleichen möglich ist, führt zu einer Schwenkverlagerung des Hebels 14 infolge entsprechender Beaufschlagung der zugewandten Fläche der Verbindungsstange 3, welche Schwenkverlagerung über die Schaltstange 11 zu einer Einwirkung auf die Bremseinrichtung 12 und ggf. auf die Schwenkeinrichtung sowohl der Rolle 6 als auch der Rolle 7 führt.

Bevorzugt führt diese Drehung der Schaltstange 11 zu einer Aufhebung der Bremsfeststellung, sofern zuvor die Bremsfeststellung, bspw. zufolge Fußbetätigung der Betätigungseinrichtung 10, aktiviert ist. Bei Ausbildung der Rollen 6 und 7 zur möglichen Totalfeststellung, wird mit Absenken der Schaltstange 11 die Totalfeststellung aufgehoben.

Entsprechend führt das Absenken der deichselförmigen Verbindungsstange 3 automatisch zu einer Aufhebung der Bremsfeststellung, insbesondere des vorderen Rollenpaares 4, und ggf. der Schwenkfeststellung.

In alternativer Ausgestaltung kann die Schaltstange 11 auch unmittelbar die Drehachse der Verbindungsstange 3 bilden, wobei in einem solchen Fall die Verbindungsstange 3 bevorzugt drehfest, zumindest über einen vorgegebenen Drehwinkelbereich, mit der Schaltstange 11 verbunden ist.

An der Verbindungsstange 3 ist weiter ein Beaufschlagungsvorsprung 15 angeformt. Dieser erstreckt sich im Wesentlichen ausgehend von der Verbindungsstangen-Drehachse tendenziell entgegen der Verfahrrichtung r nach hinten.

Der Beaufschlagungsvorsprung 15 dient zur Einwirkung auf ein weiteres Betätigungsteil 16 für das in Verfahrrichtung r betrachtete hintere, zweite Rollenpaar 5. Das Betätigungsteil 16 für das Rollenpaar 5 ist, gleich dem Betätigungsteil 17 (Hebel 14) für das in Verfahrrichtung r vordere, erste Rollenpaar 4, im Bereich des ersten Rollenpaares 4 und somit im Bereich der in Verfahrrichtung r betrachteten Stirnseite des Verfahrwagens 1 angeordnet.

Beide Betätigungsteile 16 und 17 weisen Betätigungsflächen 18 und 19 auf, welche zur Betätigung durch die Verbindungsstange 3 freiliegen.

Das Betätigungsteil 16 für das hintere Rollenpaar 5 ist im Wesentlichen ein Verschiebeteil 20, das sich in dem dargestellten Ausführungsbeispiel bodenunterseitig des Fahrgestells 2 erstreckt.

Konkret ist in dem dargestellten Ausführungsbeispiel dieses Verschiebeteil 20 durch ein Übertragungsgestänge 21 gebildet, mit zwei im Wesentlichen in Längsrichtung des Übertragungsgestänges 21 hintereinander angeordneten Übertragungsstangen 22 und 23, die über einen Kopplungshebel 24 verbunden sind. Die Verbindung zwischen den Übertragungsstangen 22 und 23 und dem Kopplungshebel 24 ist jeweils drehbar ausgeführt.

Der Kopplungshebel 24 ist etwa mittig der Längserstreckung des Verfahrwagens 1 um eine Achse quer zur Verfahrrichtung r, weiter bevorzugt gleichgerichtet zu der Drehachse y der Verbindungsstange 3, schwenkbar gehaltert. Hierzu kann eine Kopplungsstange 34, die Drehachse bildend, sich quer zur Verfahrrichtung r erstrecken, unter beidseitiger endseitiger Aufnahme in Lagerlaschen 25.

Die in Verfahrrichtung r hintere Übertragungsstange 23 des Übertragungsgestänges 21 kann mit ihrem dem Kopplungshebel 24 abgewandten freien Ende auf einen Betätigungshebel 26 einwirken, welcher bevorzugt drehbeweglich an einer weiteren, bevorzugt parallel zur der Schaltstange 11 ausgerichteten Schaltstange 27 für das hintere, zweite Rollenpaar 5 befestigt ist.

Wie bei dem vorderen Rollenpaar 4, sind auch bezüglich des hinteren Rollenpaares 5 die diesbezüglichen Hebel 36 der Betätigungseinrichtungen 10 auf einer gemeinsamen geometrischen Verschwenkachse z angeordnet. Die Hebel 36 der Betätigungseinrichtungen 10 weisen im Wesentlichen in Verfahrrichtung, darüber hinaus in der dargestellten Ausführungsform gleichgerichtet den Betätigungseinrichtungen 10 des vorderen Rollenpaares 4.

Der Hebel 36 einer Betätigungseinrichtung 10 der hinteren Rolle 8 oder 9 wirkt bei entsprechender Verlagerung desselben schwenkverlagernd auf einem Sperrvorsprung 28 der Rolle 8, 9 ein. Dieser kann entsprechend aus einer Freigabestellung in eine Sperrstellung und umgekehrt über entsprechende Schwenkverlagerung des Hebels 36 bewegt werden.

Der Hebel 36 der Betätigungseinrichtung 10 sowie das den Sperrvorsprung 28 aufweisende Sperrteil 29 sind zugeordnet einem nicht um die vertikale Schwenkachse x schwenkbaren Abschnitt der Rolle 8, 9 angeordnet. Demgegenüber ist das jeweilige Laufrad 13 um die Schwenkachse x schwenkbar, dies insbesondere zusammen mit der das Laufrad 13 tragenden Laufradgabel 30. Im Bereich eines im Wesentlichen quer zur Schwenkachse x gerichteten Radialauslegers der Laufradgabel 30 ist ein beispielsweise fensterartiger Ausschnitt 31 vorgesehen, in welchen der Sperrvorsprung 28 des Sperrteils 29 in der Schwenkhinderungsstellung der Rolle 8, 9 eintauchen kann.

Zufolge Zusammenwirkung von Sperrvorsprung 28 und Ausschnitt 31 ist eine Schwenkfeststellung der Rolle 8, 9 in der dargestellten Ausführungsform nur in einer Schwenkstellung der Laufradgabel 30 möglich. In der dargestellten Ausführungsform entspricht diese Laufradgabelstellung der Stellung, die in üblicher Verfahrrichtung r selbsttätig eingenommen wird.

Zufolge Federbeaufschlagung kann über den Hebel 36 der Sperrvorsprung 28 in Richtung auf die Sperrstellung belastet sein, wenngleich die Laufradgabel 30 noch nicht in die entsprechende Rastposition geschwenkt ist. Der Sperrvorsprung 38 gleitet federbelastet im Zuge der Verschwenkung der Laufradgabel 30 auf der dem Ausschnitt 31 benachbarten Fläche der Laufradgabel 30 ab, um abschließend in der einen möglichen Schwenkstellung sperrend in den Ausschnitt 31 einzutreten.

Die Schaltstange 27 ergreift bezüglich des hinteren Rollenpaares 5 die Hebelarme 35 der Betätigungseinrichtung 10, die Hebelarme 35 hierbei klemmend aufnehmend. Im Wesentlichen ist die Klemmerfassung zugeordnet dem freien, der Schwenkachse z abgewandten Endbereich des Hebelarmes 35 vorgesehen.

Die Schaltstange 27 kann hierzu bspw., wie auch dargestellt, ein Vierkant-Hohlprofil aufweisen, ggf. sich zusammensetzend aus zwei aufeinander mit ihren U-Öffnungen weisenden U-Profilen.

Jedenfalls ergibt sich zwischen den beiden U-Profilen oder zufolge eines entsprechenden Einschnitts bei einem Vierkant-Hohlprofil ein Aufnahmeschlitz 37, in welchen der freie Endbereich des Hebelarmes 35 eingreift. Entsprechend ist der freie Endbereich des Hebelarmes 35 bezüglich dessen Breitseitenflächen ober- und unterseitig durch die Schaltstange 27 erfasst, weiter bevorzugt von dieser bzw. von Teilabschnitten dieser Schaltstange 27 flankiert.

Zur Verspannung und Klemmfestlegung kann zugeordnet jeder Rolle 8 und 9 bzw. zugeordnet der jeweiligen Betätigungseinrichtung 10 zumindest eine, ggf. zwei Spannschrauben 38 vorgesehen sein, deren Schraubenachse senkrecht zur Längserstreckung der Schaltstange 27 verläuft und in einer Projektion in Längsrichtung der Schaltstange 27 den Hebelarm 35 im ober- und unterseitig durch die Schaltstange 27 erfassten Bereich durchsetzt.

Die Schwenkachse der Schaltstange 27 des hinteren Rollenpaares 5 ist somit gegeben durch die Schwenkachse z der hebelartigen Betätigungseinrichtungen 10 der beiden diesbezüglichen Rollen 8 und 9.

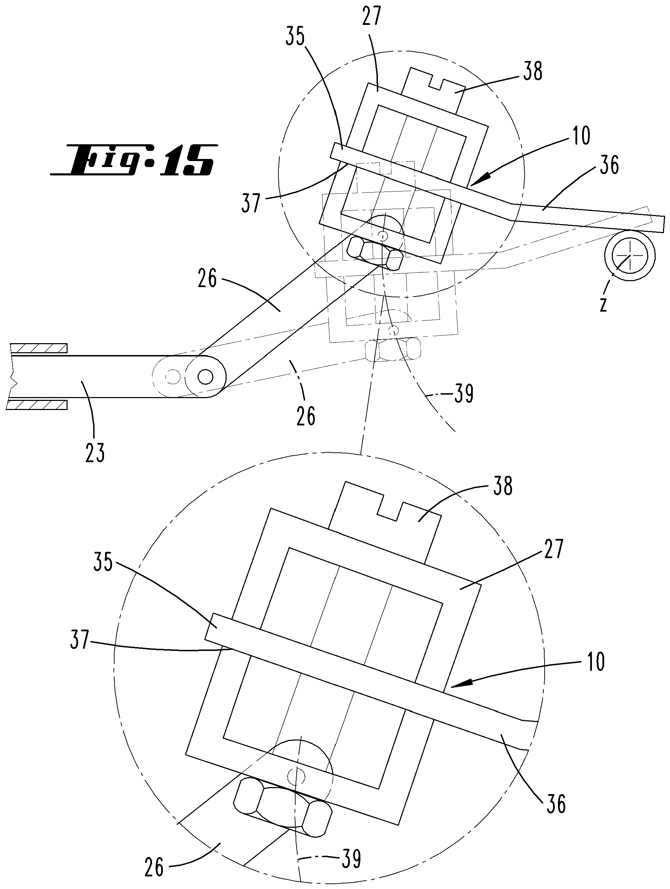

Die Schaltstange 27 bewegt sich entsprechend zur Verlagerung des Hebels 36 der Betätigungseinrichtung 10 aus der einen, bevorzugt anschlagbegrenzten, Schwenkfreigabestellung heraus entlang einer in einer quer zur Schwenkachse z ausgerichteten Ebene verlaufenden Kreislinie 39 in die ebenfalls bevorzugt anschlagbegrenzte Schwenkfestlegungsstellung und zurück (vgl. auch Figur 15).

Mit Abschwenken der Verbindungsstange 3 wird zufolge Beaufschlagung des Verschiebeteils 20 durch den Beaufschlagungsvorsprung 15 über das Übertragungsgestänge 21 auf die Betätigungseinrichtungen 10 des hinteren Rollenpaares 5 eingewirkt. Zufolge der Gelenkausbildung zwischen den Übertragungsstangen 22 und 23 über den Kopplungshebel 24 ergibt sich in dieser Situation eine Verlagerung der Übertragungsstange 23 im Wesentlichen in Richtung der Verfahrrichtung r, womit weiter im Wesentlichen auf den endseitig angelenkten Betätigungshebel 26 und die hieran gelenkig angeordnete Schaltstange 27 eine Zugeinwirkung vorgenommen wird. Die Übertragungsstange 23 kann hierbei unterseitig des Fahrgestells 2 geführt sein.

Zufolge der vorbeschriebenen Verlagerung der Übertragungsstange 23 wird die Schaltstange 27 über den Betätigungshebel 26 entlang der Kreislinie 39 mitgeschleppt, dies unter entsprechender Schwenkverlagerung des eingespannten Hebels 36 der Betätigungseinrichtung 10. Entsprechend ist mit Abschwenken der Verbindungsstange 3 die Schwenkfestlegungsstellung des hinteren Rollenpaares 5 eingenommen oder zumindest vorbereitet, so dass mit einem Bewegen des Verfahrwagens in Verfahrrichtung r und damit einhergehender selbsttätiger Verschwenkung der Rollen 8 und 9 um die Schwenkachse z die Schwenkfestlegungsstellung selbsttätig eingenommen wird.

Die Rückverlagerung in die Schwenkfreigabestellung erfolgt willensbetont zufolge der fußhebelartigen Betätigungseinrichtung 32, worüber die Übertragungsstange 23 im Wesentlichen entgegen der Verfahrrichtung r bewegt wird und somit über den Betätigungshebel 26 die Schaltstange 27 entlang der Kreislinie 39 unter Mitnahme der Betätigungseinrichtungen 10 zurückverlagert wird.

Auch ist über die fußhebelartige Betätigungseinrichtung 32 in der hochgeschwenkten Stellung der Verbindungsstange 3 die Schwenkfestlegungsstellung der hinteren Rollen 8 und 9 bzw. des hinteren Rollenpaares 5 erreichbar.

In bevorzugter Ausgestaltung ist durch Abschwenken der Verbindungsstange 3 in eine abgesenkte Stellung, bspw. zum Ankoppeln des Verfahrwagens 1 an ein Zugfahrzeug, und der damit einhergehenden Beaufschlagung der Betätigungsflächen 18 und 19 der Betätigungsteile 16 und 17 über die Verbindungsstange 3 zufolge entsprechender Drehverlagerung der vorderen Schaltstange 11 eine Aufhebung der Bremsfeststellung bzw. Totalfeststellung des vorderen, ersten Rollenpaares 4 bewirkt und über das Übertragungsgestänge 21 und die hintere Schaltstange 27 eine Auslösung der Richtungsfeststellung bezüglich des hinteren, zweiten Rollenpaares 5 erreicht. Der Verfahrwagen 1 ist hiernach frei beweglich, wobei bevorzugt die Rollen 6 und 7 des vorderen Rollenpaares 4 weiterhin schwenkbeweglich um die Schwenkachse x bewegbar sind, die hinteren Rollen 8 und 9 des Rollenpaares 5 hingegen unter Blockierung der Schwenkbarkeit als Bockrollen fungieren.

Ein Aufschwenken der Verbindungsstange 3 aus der abgeschwenkten Stellung in die hochgeschwenkte Stellung gemäß der Darstellung in Figur 9 führt in dem dargestellten Ausführungsbeispiel infolge fehlender Einflussnahme auf die Betätigungsteile 16 und 17 zu keiner Beeinflussung der Rollen.

Die Aktivierung der Bremseinrichtung und ggf. Schwenkeinrichtung kann in üblicher Weise zufolge Fußbetätigung der an den Rollen 6 und 7 vorgesehenen Betätigungseinrichtung 10 erfolgen.

Zur Wiedererlangung der vollständigen Schwenkbarkeit um 360° der hinteren Rollen 8 und 9 muss die Bockrollenstellung aufgehoben werden, dies zufolge entsprechender Schwenkrückstellung der Betätigungseinrichtungen 10 der hinteren Rollen 8 und 9. Eine solche Rücksetzung kann über das Übertragungsgestänge 21 erfolgen, zufolge entsprechender Rückverlagerung der diesbezüglichen Übertragungsstangen 22 und 23.

In dem dargestellten Ausführungsbeispiel ist hierfür eine weitere Betätigungseinrichtung 32 vorgesehen in Form eines schwenkbaren Fußhebels 33, welcher drehfest und seitlich des Verfahrwagens 1 zugänglich und mit der den Kopplungshebel 24 tragenden Kopplungsstange 34 verbunden ist.

Über die bevorzugt anschlagbegrenzte Schwenkendstellung des Fußhebels 33 kann der Benutzer Rückschlüsse auf den Zustand der Schwenkfeststelleinrichtung der hinteren Rollen 8 und 9 ziehen. In der einen Schwenkendstellung ist die Schwenkfeststelleinrichtung zur Nutzung der Rollen 8 und 9 als Bockrollen aktiviert, in der anderen Schwenkendstellung deaktiviert, zur Nutzung der Rollen 8 und 9 als Schwenkrollen.

Über den Fußhebel 33 kann entsprechend auf das Übertragungsgestänge 21 eingewirkt werden, wobei in dem dargestellten Ausführungsbeispiel der Fußhebel 33 zwei in Schwenkrichtung der Achse 34 zueinander beabstandete Hebel aufweist, so dass sowohl eine Betätigung des Übertragungsgestänges 21 in die eine als auch in die andere Richtung über den Fußhebel 33 möglich ist. Entsprechend kann mittels des Fußhebels 33 unabhängig von der Stellung der Verbindungsstange 3 sowohl die Bockrollenstellung des hinteren Rollenpaares 5 eingenommen werden, wie auch diese Bockrollenstellung aufgehoben werden.

Es ist sichergestellt, dass mit Abschwenken der Verbindungsstange 3 in eine übliche Ankoppelstellung des Verfahrwagens 1 die Bremseinrichtung des vorderen Rollenpaares 4 deaktiviert ist und die Rollen des hinteren Rollenpaares 5 in eine Bockrollenstellung verbracht sind.

Das Verschiebeteil 20 bzw. Teile des Übertragungsgestänges oder das gesamte Übertragungsgestänge 21, insbesondere die Übertragungsstangen 22 und/oder Kopplungsstange 34, ggf. auch der Kopplungshebel 24, können teilweise oder ganz in dem Rahmen des Fahrgestells 2 aufgenommen sein, um so einen Unterfahrschutz sicherzustellen. Der Verfahrwagen 1 kann so geeignet sein, zur Stapelung von einer Hubgabel unterfahren zu werden.

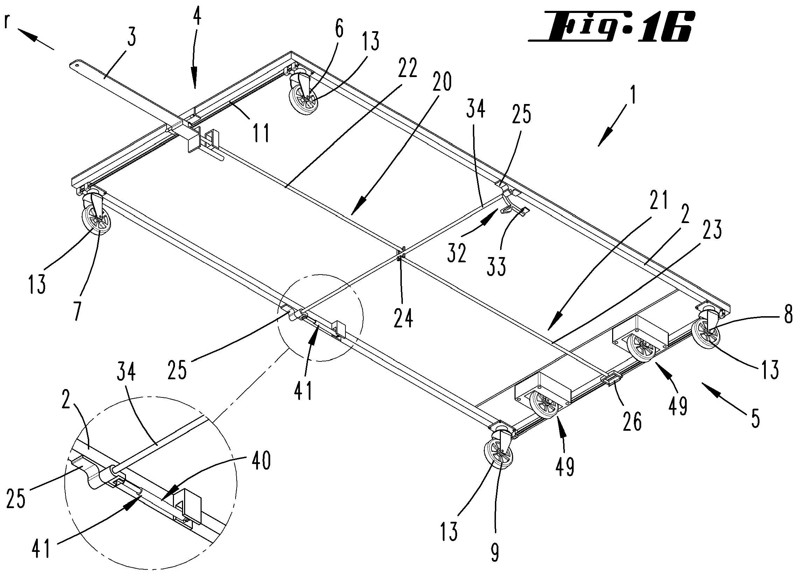

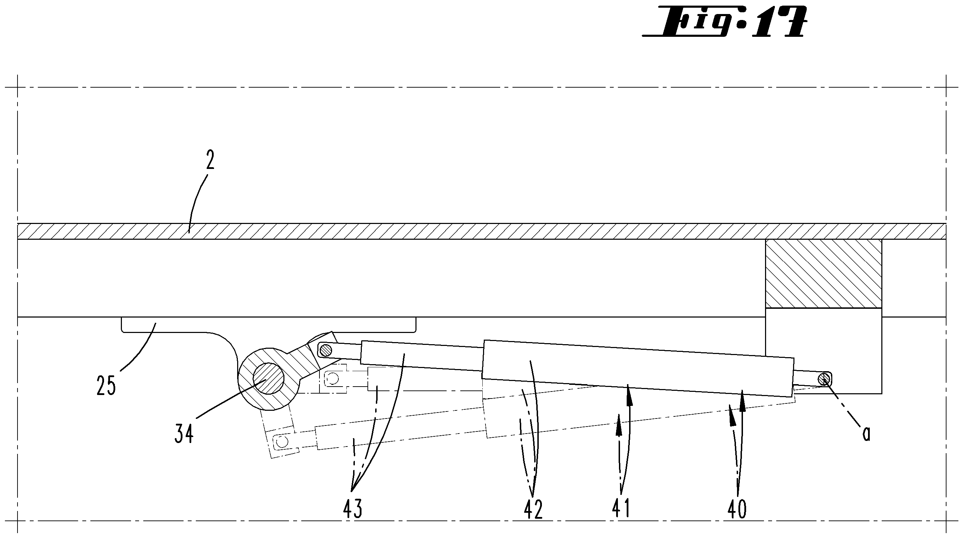

Zur Unterstützung der einen oder anderen Bewegungsendstellung des Übertragungsgestänges 21 kann gemäß der in den Figuren 16 und 17 dargestellten zweiten Ausführungsform eine Feder 40 vorgesehen sein, die entsprechend auf das Übertragungsgestänge 21 einwirkt.

Bevorzugt, wie auch dargestellt, ist hierzu eine Gasdruckfeder 41 mit einem Druckrohr 42 und einer Kolbenstange 43.

Die Gasdruckfeder 41 ist im Bereich ihres Druckrohres 42 an dem Fahrgestell 2, beispielsweise an einem Längsträger des Fahrgestells 2, angelenkt, dies um eine geometrische Schwenkachse a, die bevorzugt parallel verläuft zu der geometrischen Längsachse der Kopplungsstange 34.

Mit der Kolbenstange 43 wirkt die Gasdruckfeder 41 in dem dargestellten Ausführungsbeispiel über einen mit der Kopplungsstange 34 drehfest verbundenen Hebel zusammen.

Die Kopplungsstange 34 ist insbesondere in diesem Fall mit den die Übertragungsstangen 22 und 23 verbindenden Kopplungshebel 24 drehfest verbunden. Eine beispielsweise über eine Schwenkverlagerung der Verbindungsstange 3 oder über den Fußhebel 33 bewirkte Verlagerung des Kopplungshebels 24 führt zu einer entsprechenden Schwenkverlagerung des das Kolbenstangenende aufnehmenden Hebels.

In einer möglichen Ausgestaltung ist die Gasdruckfeder 41 so angeordnet, dass sich im Wesentlichen zwei stabile Bewegungsendstellungen ergeben, in welchen beiden Bewegungsendstellungen, von denen eine in Figur 17 strichpunktiert dargestellt ist, die Gasdruckfeder 41 mit ihrer Federkraft auf das Übertragungsgestänge 21 wirkt.

Die Schwenkverlagerung der Gasdruckfeder 41 aus der einen Bewegungsendstellung in die andere Bewegungsendstellung kann unter Durchlauf einer im Wesentlichen mittigen, bevorzugt nicht stabilen Stellung, erfolgen, so dass mit Überschreiten dieser mittigen Stellung auch die Federkraft der Gasdruckfeder 41 das Übertragungsgestänge 21 in die diesbezügliche Bewegungsendstellung drängt und darüber hinaus abschließend dort hält.

Eine Rückverlagerung aus der eingenommenen Bewegungsendstellung in die andere Bewegungsendstellung erfolgt stets entgegen der zu überwindenden Kraft der Gasdruckfeder 41.

Eine weitere Gasdruckfeder 44 kann im Bereich der Verbindungsstange 3 vorgesehen sein. Auch diese Gasdruckfeder 44 verfügt über ein Druckrohr 45 und eine Kolbenstange 46, wobei auch hier die Gasdruckfeder 44 im Bereich des Druckrohres 45 fahrgestellseitig, weiter beispielsweise im Bereich eines Rahmenabschnittes 48, angelenkt ist. Die Anlenkung kann, wie auch bevorzugt, der der Anlenkung der Gasdruckfeder 41 entsprechen.

Mittels der Kolbenstange 46 wirkt die Gasdruckfeder 44 in der dargestellten Ausführungsform unmittelbar auf die Verbindungsstange 3 ein, hier im Bereich eines Hebelfortsatzes 47, der gemäß den Darstellungen Teil des Beaufschlagungsvorsprunges 15 sein kann.

Zufolge der Anordnung der Gasdruckfeder 44 kann die Verbindungsstange 3 aus der im Wesentlichen horizontalen Ausrichtung, beispielsweise nach einem Abhängen des Verfahrwagens 1 von einem Zugwagen, selbsttätig, federunterstützt in die aufgeschwenkte Stellung zurückschwenken. Dieses Aufschwenken erfolgt bewegungsgedämpft zufolge der bevorzugten Anordnung einer Gasdruckfeder. Auch kann hierdurch eine stets gleiche Ausrichtung der Verbindungsstange 3 in der hochgeschwenkten Stellung erreicht werden.

Zur Unterstützung der Verfahrbarkeit des Verfahrwagens 1 von Hand, kann der Verfahrwagen 1 insbesondere zum Transport von Schwerlasten, mit zumindest einer motorisch antreibbaren Rolle 49 versehen sein. Gemäß den Darstellungen können auch beispielsweise zwei solcher Rollen 49 vorgesehen sein, die gegebenenfalls im Wesentlichen fluchtend zu den Rollen 8 und 9 des hinteren Rollenpaares 5 und im Wesentlichen zwischen den Rollen 8 und 9 unter Einhaltung eines Abstandes zu diesen Rollen 8 und 9, wie auch zwischen den Rollen 49, angeordnet sein.

Eine solche elektromotorisch antreibbare Rolle ist aus der erwähnten EP 2 675 416 B1 bekannt. Bezüglich der Wirkungsweise der Rolle 49 wird auf die Ausführungen in diesem Europapatent verwiesen.

Die Rolle 49 ist unterseitig des Fahrgestells 2 an diesem montiert, wobei weiter die Rolle 49 insgesamt in einer Baueinheit 52 aufgenommen ist.

Die Baueinheit 52 weist im Wesentlichen einen Elektromotor 50 und darüber hinaus ein Getriebe 51 auf, über welches auf die Rolle 49 antreibend eingewirkt wird.

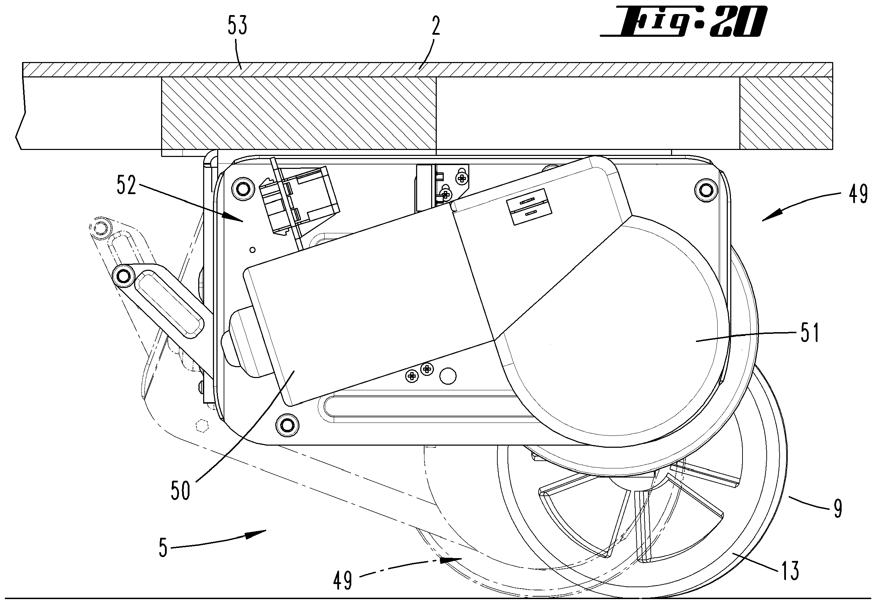

Die Rolle 49, insbesondere die Baueinheit 52 ist gegenüber einem, eine Montageplatte 53 aufweisenden Basisbereich schwenkbar zum Anheben und Absenken der Rolle 49 (siehe strichpunktierte Darstellung in Figur 20).

In der angehobenen Stellung ist der Bodenkontakt der Rolle 49 aufgehoben, während in der abgesenkten Stellung die Rolle 49 elektromotorisch angetrieben sich auf den Boden abstützend den Verfahrwagen 1 gegebenenfalls unterstützend bewegt.

Der Verfahrwagen 1 verfügt in diesem Fall über eine Sensorik, über welche der Benutzer die Rolle 49 steuern kann. Über diese Sensorik, gegebenenfalls aber auch über eine weitere, unmittelbar die Lage der Verbindungsstange 3 erfassende Sensorik, erfolgt auch, bevorzugt selbsttätig, ein Anheben der Rolle 49 bei Anhängen des Verfahrwagens 1 an einen Zugwagen.

Wie dargestellt, kann die geometrische Laufachse der Rolle 49 gleichgerichtet sein zu den Laufachsen insbesondere des hinteren Rollenpaares 5 in der gesperrten Bockrollenstellung. Auch ist diesbezüglich eine Ausrichtung quer zur üblichen Verfahrrichtung r möglich.

**Liste der Bezugszeichen**

| | | | |
|---|---|---|---|
| 1 | Verfahrwagen | 29 | Sperrteil |
| 2 | Fahrgestell | 30 | Laufradgabel |
| 3 | Verbindungsstange | 31 | Ausschnitt |
| 4 | Rollenpaar | 32 | Betätigungseinrichtung |
| 5 | Rollenpaar | 33 | Fußhebel |
| 6 | Rolle | 34 | Kopplungsstange |
| 7 | Rolle | 35 | Hebelarm |
| 8 | Rolle | 36 | Hebel |
| 9 | Rolle | 37 | Aufnahmeschlitz |
| 10 | Betätigungseinrichtung | 38 | Spannschraube |
| 11 | Schaltstange | 39 | Kreislinie |
| 12 | Bremseinrichtung | 40 | Feder |
| 13 | Laufrad | 41 | Gasdruckfeder |
| 14 | Hebel | 42 | Druckrohr |
| 15 | Beaufschlagungsvorsprung | 43 | Kolbenstange |
| 16 | Betätigungsteil | 44 | Gasdruckfeder |
| 17 | Betätigungsteil | 45 | Druckrohr |
| 18 | Betätigungsfläche | 46 | Kolbenstange |
| 19 | Betätigungsfläche | 47 | Hebelfortsatz |
| 20 | Verschiebeteil | 48 | Rahmenabschnitt |
| 21 | Übertragungsgestänge | 49 | Rolle |
| 22 | Übertragungsstange | 50 | Elektromotor |
| 23 | Übertragungsstange | 51 | Getriebe |
| 24 | Kopplungshebel | 52 | Baueinheit |
| 25 | Lagerlasche | 53 | Montageplatte |
| 26 | Betätigungshebel | | |
| 27 | Schaltstange | | |
| 28 | Sperrvorsprung | | |
| a | Schwenkachse | | |
| r | Verfahrrichtung | | |
| x | Schwenkachse | | |
| y | Drehachse | | |
| z | Schwenkachse | | |

## Patentansprüche

1. Über ein Schaltgestänge zu betätigende Rollen (6, 7, 8, 9), bspw. bei einem Verfahrwagen (1), wobei ein erstes bremsfeststellbares Rollenpaar (4) und ein zweites Rollenpaar (5) vorgesehen sind, wobei weiter das erste Rollenpaar (4) und das zweite Rollenpaar (5) über eine gemeinsame erste bzw. zweite Schaltstange (11, 27) verbunden sind und auf beide Rollenpaare (4, 5) gesondert voneinander mittels jeweils eine freie Betätigungsfläche (18, 19) aufweisende Betätigungsteile (16, 17) einwirkbar ist und beide Betätigungsflächen (18, 19) im Bereich des ersten Rollenpaares (4) angeordnet sind, **dadurch gekennzeichnet, dass** die Rollen (8, 9) des zweiten Rollenpaares (5) bei in üblichem Gebrauchszustand um eine vertikale Schwenkachse schwenkbarer Anordnung hinsichtlich einer Laufrichtung feststellbar sind und dass die Einwirkung auf das erste und zweite Rollenpaar (4, 5) über die Betätigungsflächen (18, 19) zugleich und nur im Sinne einer Aufhebung der Bremsfeststellung des ersten Rollenpaares (4) und einer Auslösung der Richtungsfeststellung des zweiten Rollenpaares (5) durchführbar ist.

2. Rollen nach Anspruch 1, **dadurch gekennzeichnet, dass** eine Betätigungsfläche (19) an einem freien Ende eines Hebels (14) ausgebildet ist.

3. Rollen nach einem der vorhergehenden Ansprüche, **dadurch gekennzeichnet, dass** die Betätigungsfläche (18) an einem freien Ende eines Verschiebeteiles (20) ausgebildet ist und/oder dass die Einwirkung auf das zweite Rollenpaar (5) über ein Übertragungsgestänge (21) erfolgt wobei, bevorzugt, die zweite Schaltstange (27) des zweiten Rollenpaares (5) einen Betätigungshebel (26) aufweist, auf welchen durch ein freies Ende des Übertragungsgestänges (21) einwirkbar ist.

4. Rollen nach einem der vorhergehenden Ansprüche, **dadurch gekennzeichnet, dass** zusätzlich zu den Betätigungsflächen (18, 19) eine Betätigungseinrichtung (10, 32), bspw. zur Fußbetätigung, vorgesehen ist, die auf eine oder beide Rollen (6, 7, 8, 9) des ersten und/oder zweiten Rollenpaares (4, 5) einwirkt, wobei, bevorzugt, die Betätigungseinrichtung (32) zur zusätzlichen Einwirkung auf das zweite Rollenpaar (5) als Fußhebel (33) ausgebildet ist.

5. Rollen nach Anspruch 4, **dadurch gekennzeichnet, dass** der Fußhebel (33) zur Einwirkung auf das Übertragungsgestänge (21) ausgebildet ist.

6. Rollen nach einem der Ansprüche 3 bis 5, **dadurch gekennzeichnet, dass** auf das Übertragungsgestänge (21) mittels einer Feder (40) zur Beaufschlagung des Übertragungsgestänges (21) in eine Bewegungsendstellung eingewirkt ist, wobei, bevorzugt, die Feder (40) eine Gasdruckfeder (41) ist und, weiter bevorzugt, die Gasdruckfeder (41) einerends an dem Übertragungsgestänge (21) und anderenends an einem Fahrgestell (2) des Verfahrwagens (1) angelenkt ist.

7. Rollen nach einem der Ansprüche 3 bis 6, **dadurch gekennzeichnet, dass** das Übertragungsgestänge (21) zwei im Wesentlichen in Längsrichtung des Übertragungsgestänges (21) angeordnete Übertragungsstangen (22, 23) aufweist, die über einen Kopplungshebel (24) verbunden sind, wobei, bevorzugt, mit der Betätigungseinrichtung (32) für das zweite Rollenpaar (5) auf den Kopplungshebel (24) einwirkbar ist.

8. Rollen nach einem der Ansprüche 4 bis 7, **dadurch gekennzeichnet, dass** die Betätigungseinrichtung (10) unmittelbar an der Rolle (6, 7, 8, 9) ausgebildet ist, zur Auslösung und/oder Aufhebung der Bremsfeststellung und/oder der Richtungsfeststellung der Rolle (6, 7, 8, 9) und/oder die Betätigungseinrichtung (10) ein fußbetätigbarer Hebel (36) mit einem zur Fußbetätigung frei abragenden Hebelarm (35) ist, wobei die Betätigungseinrichtung (10) bei Ausbildung der Rolle (6, 7, 8, 9) als um eine vertikale Schwenkachse (x) schwenkbare Rolle (6, 7, 8, 9) relativ zu dem Laufrad (13), bezogen auf die Verschwenkbarkeit, feststehend ist.

9. Rollen nach einem der Ansprüche 4 bis 8, **dadurch gekennzeichnet, dass** die Schaltstange (11, 27) drehfest mit der an der Rolle (6, 7, 8, 9) ausgebildeten Betätigungseinrichtung (10) verbunden ist, unter Bildung einer Schwenkachse (z) der hebelartigen Betätigungseinrichtungen (10).

10. Rollen nach einem der Ansprüche 8 oder 9, **dadurch gekennzeichnet, dass** die Schaltstange (11, 27) unmittelbar auf den Hebelarm (35) der Betätigungseinrichtung (10) einwirkt.

11. Rollen nach einem der Ansprüche 8 bis 10, **dadurch gekennzeichnet, dass** der Hebelarm (35) mit der Schaltstange (11, 27) klemmverbunden ist.

12. Verfahrwagen (1) mit zwei Rollenpaaren (4, 5), von denen das erste Rollenpaar (4) in üblicher Verfahrrichtung (r) des Verfahrwagens (1) vorne und das zweite Rollenpaar (5) hinten angeordnet ist, wobei weiter das erste Rollenpaar (4) als bremsfeststellbares Rollenpaar ausgebildet ist und die bremsfeststellbaren Rollen (6, 7) des ersten Rollenpaares (4) über eine gemeinsame erste Schaltstange (11) und die Rollen (8, 9) des zweiten Rollenpaares (5) über eine gemeinsame zweite Schaltstange (27) verbunden sind, wobei auf beide Rollenpaare (4, 5) gesondert voneinander mittels jeweils eine freie Betätigungsfläche (18, 19) aufweisende Betätigungsteile (16, 17) einwirkbar ist und wobei weiter beide Betätigungsflächen (18, 19) im Bereich des ersten Rollenpaares (4) angeordnet sind, **dadurch gekennzeichnet, dass** die Rollen (6, 7) des zweiten Rollenpaares (5) bei in üblichem Gebrauchszustand um eine vertikale Schwenkachse schwenkbarer Anordnung als hinsichtlich einer Laufrichtung feststellbare Rollen (8, 9) ausgebildet sind, dass der Verfahrwagen (1) eine gelenkig an dem Verfahrwagen (1) angeordnete Verbindungsstange (3), zur Ankopplung etwa an einen Zugwagen, aufweist, dass die Verbindungsstange (3) um eine Drehachse (y) zwischen einer abgesenkten und einer hochgeschwenkten Stellung bewegbar ist und dass mit einem Absenken der Verbindungsstange (3) in die Ankoppelstellung die Bremsfeststellung des ersten Rollenpaares (4) aufgehoben und die Laufrichtung des zweiten Rollenpaares (5) festgestellt ist.

13. Verfahrwagen nach Anspruch 12, **dadurch gekennzeichnet, dass** die Verbindungsstange (3) zur Einwirkung auf eine oder beide Betätigungsflächen (18, 19) im Zuge einer Bewegung der Verbindungsstange (3) aus der hochgeschwenkten Stellung heraus in die abgesenkte Stellung ausgebildet ist.

14. Verfahrwagen nach einem der Ansprüche 12 oder 13, **dadurch gekennzeichnet, dass** die Verbindungsstange (3) in ihre hochgeschwenkte Stellung mittels einer Gasdruckfeder (44) vorgespannt ist, wobei, bevorzugt, die Gasdruckfeder (44) einerends an einem Fahrgestell (2) des Verfahrwagens (1) und anderenends an der Verbindungsstange (3) angelenkt ist und/oder die Anlenkung an der Verbindungsstange (3) an einem bezüglich der Drehachse (y) der Verbindungsstange (3) gegenüberliegenden Hebelfortsatz (47) erfolgt.

15. Verfahrwagen nach einem der Ansprüche 12 bis 14, **dadurch gekennzeichnet, dass** an dem Verfahrwagen (1) eine motorisch angetriebene Rolle (49) angeordnet ist, wobei die motorisch angetriebene Rolle (49) anhebbar ist.

## Claims

1. Rollers (6, 7, 8, 9), e.g. for a mobile carriage (1), that are to be actuated by means of a shift linkage, a first brake-lockable pair of rollers (4) and a second pair of rollers (5) being provided, and the first pair of rollers (4) and the second pair of rollers (5) being connected by means of a common first and second shift rod (11, 27) respectively, and it being possible for the two pairs of rollers (4, 5) to be acted upon separately from one another by means of actuating parts (16, 17) each having a free actuating surface (18, 19), and the two actuating surfaces (18, 19) being arranged in the region of the first pair of rollers (4), **characterised in that** the rollers (8, 9) of the second pair of rollers (5) can be locked with respect to a direction of travel when the arrangement can be pivoted about a vertical pivot axis in the usual state of use, and **in that** the first and second pair of rollers (4, 5) can be acted upon by means of the actuating surfaces (18, 19) at the same time and only in the sense of cancelling the brake locking of the first pair of rollers (4) and triggering the directional locking of the second pair of rollers (5).

2. Rollers according to claim 1, **characterised in that** one actuating surface (19) is formed at a free end of a lever (14).

3. Rollers according to either of the preceding claims, **characterised in that** the actuating surface (18) is formed at a free end of a movable part (20) and/or **in that** the second pair of rollers (5) is acted upon by means of a transmission linkage (21), the second shift rod (27) of the second pair of rollers (5) preferably having an actuating lever (26) upon which a free end of the transmission linkage (21) can act.

4. Rollers according to any of the preceding claims, **characterised in that**, in addition to the actuating surfaces (18, 19), an actuating device (10, 32), e.g for actuation by foot, is provided that acts upon one or both rollers (6, 7, 8, 9) of the first and/or second pair of rollers (4, 5), the actuating device (32) preferably being designed as a foot lever (33) to additionally act upon the second pair of rollers (5).

5. Rollers according to claim 4, **characterised in that** the foot lever (33) is designed to act upon the transmission linkage (21).

6. Rollers according to any of claims 3 to 5, **characterised in that** the transmission linkage (21) is acted upon by means of a spring (40) for loading the transmission linkage (21) into a movement end position, the spring (40) preferably being a gas spring (41) and more preferably the gas spring (41) being articulated at one end on the transmission linkage (21) and at the other end on a chassis (2) of the mobile carriage (1).

7. Rollers according to any of claims 3 to 6, **characterised in that** the transmission linkage (21) has two transmission rods (22, 23) which are arranged substantially in the longitudinal direction of the transmission linkage (21) and which are connected by means of a coupling lever (24), it being possible, preferably, for the coupling lever (24) to be acted upon by the actuating device (32) for the second pair of rollers (5).

8. Rollers according to any of claims 4 to 7, **characterised in that** the actuating device (10) is formed directly on the roller (6, 7, 8, 9) in order to trigger and/or cancel the brake locking and/or the directional locking of the roller (6, 7, 8, 9), and/or the actuating device (10) is a foot-actuable lever (36) having a lever arm (35) which projects freely in order to be actuated by foot, the actuating device (10) being stationary, with respect to pivotability, relative to the wheel (13) when forming the roller (6, 7, 8, 9) as a roller (6, 7, 8, 9) which is pivotable about a vertical pivot axis (x).

9. Rollers according to any of claims 4 to 8, **characterised in that** the shift rod (11, 27) is connected to the actuating device (10) on the roller (6, 7, 8, 9) for rotation therewith and so as to form a pivot axis (z) of the lever-like actuating devices (10).

10. Rollers according to either claim 8 or claim 9, **characterised in that** the shift rod (11, 27) acts directly upon the lever arm (35) of the actuating device (10).

11. Rollers according to any of claims 8 to 10, **characterised in that** the lever arm (35) is connected to the shift rod (11, 27) in a clamped manner.

12. Mobile carriage (1), comprising two pairs of rollers (4, 5), of which the first pair of rollers (4) is arranged at the front and the second pair of rollers (5) is arranged at the rear in the usual direction of motion (r) of the mobile carriage (1), and the first pair of rollers (4) being designed as a brake-lockable pair of rollers and the brake-lockable rollers (6, 7) of the first pair of rollers (4) being connected by means of a common first shift rod (11) and the rollers (8, 9) of the second pair of rollers (5) being connected by means of a common second shift rod (27), it being possible for the two pairs of rollers (4, 5) to be acted upon separately from one another by means of actuating parts (16, 17) each having a free actuating surface (18, 19), and the two actuating surfaces (18, 19) being arranged in the region of the first pair of rollers (4), **characterised in that** the rollers (6, 7) of the second pair of rollers (5) are designed as rollers (8, 9) which are lockable with respect to a direction of travel when the arrangement can be pivoted about a vertical pivot axis in the usual state of use, **in that** the mobile carriage (1) has a connecting rod (3) which is arranged so as to be articulated on the mobile carriage (1) in order to be joined e.g. to a towing carriage, **in that** the connecting rod (3) can be moved about an axis of rotation (y) between a lowered and an elevated position, and **in that**, when the connecting rod (3) is lowered into the joining position, the brake locking of the first pair of rollers (4) is cancelled and the direction of travel of the second pair of rollers (5) is locked.

13. Mobile carriage according to claim 12, **characterised in that** the connecting rod (3) is designed to act upon one or both actuating surfaces (18, 19) when the connecting rod (3) moves from the elevated position into the lowered position.

14. Mobile carriage according to either claim 12 or claim 13, **characterised in that** the connecting rod (3) is pre-loaded into its elevated position by means of a gas spring (44), the gas spring (44) preferably being articulated at one end on a chassis (2) of the mobile carriage (1) and at the other end on the connecting rod (3), and/or the articulation on the connecting rod (3) being at a lever extension (47) located opposite with respect to the axis of rotation (y) of the connecting rod (3).

15. Mobile carriage according to any of claims 12 to 14, **characterised in that** a motor-driven roller (49) is arranged on the mobile carriage (1), it being possible for the motor-driven roller (49) to be raised.

## Revendications

1. Roulettes (6, 7, 8, 9) à actionner par l'intermédiaire d'une tringlerie de commande, par exemple dans le cas d'un chariot mobile (1), dans lesquelles sont prévues une première paire de roulettes (4) qui peut être bloquée par frein et une deuxième paire de roulettes (5), dans lesquelles en outre la première paire de roulettes (4) et la deuxième paire de roulettes (5) sont reliées respectivement par une première et une deuxième tige de commande commune (11, 27) et il est possible d'agir sur les deux paires de roulettes (4, 5) séparément l'une de l'autre au moyen de pièces d'actionnement (16, 17) présentant chacune une surface d'actionnement libre (18, 19) et les deux surfaces d'actionnement (18, 19) sont agencées dans la région de la première paire de roulettes (4), **caractérisées en ce que** les roulettes (8, 9) de la deuxième paire de roulettes (5) peuvent, par rapport à une direction de marche, être bloquées dans un agencement qui peut pivoter autour d'un axe de pivotement vertical dans l'état d'utilisation habituel et **en ce que** l'action sur la première et la deuxième paire de roulettes (4, 5) par l'intermédiaire des surfaces d'actionnement (18, 19) peut être effectuée simultanément et uniquement dans le sens d'une suppression du blocage par frein de la première paire de roulettes (4) et du déclenchement du blocage directionnel de la deuxième paire de roulettes (5).

2. Roulettes de la revendication 1, **caractérisées en ce qu'**une surface d'actionnement (19) est formée à une extrémité libre d'un levier (14).

3. Roulettes selon l'une des revendications précédentes, **caractérisées en ce que** la surface d'actionnement (18) est formée à une extrémité libre d'une pièce de déplacement (20) et/ou que l'action sur la deuxième paire de roulettes (5) s'effectue par l'intermédiaire d'une tringlerie de transmission (21), dans lesquelles, de préférence, la deuxième tige de commande (27) de la deuxième paire de roulettes (5) présente un levier d'actionnement (26) sur lequel il est possible d'agir par le biais d'une extrémité libre de la tringlerie de transmission (21).

4. Roulettes selon l'une des revendications précédentes, **caractérisées en ce qu'**il est prévu, en plus des surfaces d'actionnement (18, 19), un dispositif d'actionnement (10, 32), par exemple pour l'actionnement au pied, qui agit sur une ou les deux roulettes (6, 7, 8, 9) de la première et/ou de la deuxième paire de roulettes (4, 5), le dispositif d'actionnement (32) étant de préférence réalisé sous la forme d'un levier à pied (33) pour agir en plus sur la deuxième paire de roulettes (5).

5. Roulettes selon la revendication 4, **caractérisées en ce que** le levier à pied (33) est formé pour agir sur la tringlerie de transmission (21).

6. Roulettes selon l'une des revendications 3 à 5, **caractérisées en ce qu'**une action est exercée sur la tringlerie de transmission (21) au moyen d'un ressort (40) pour solliciter la tringlerie de transmission (21) dans une position finale de déplacement, dans lesquelles, de préférence, le ressort (40) est un ressort à pression de gaz (41) et, de préférence encore, le ressort à pression de gaz (41) est articulé à une extrémité sur la tringlerie de transmission (21) et à l'autre extrémité sur un châssis (2) du chariot mobile (1).

7. Roulettes selon l'une des revendications 3 à 6, **caractérisées en ce que** la tringlerie de transmission (21) comprend deux tiges de transmission (22, 23) agencées sensiblement dans la direction longitudinale de la tringlerie de transmission (21), qui sont reliées par un levier d'accouplement (24), dans lesquelles, de préférence, il est possible d'agir avec le dispositif d'actionnement (32) pour la deuxième paire de roulettes (5) sur le levier d'accouplement (24).

8. Roulettes selon l'une des revendications 4 à 7, **caractérisées en ce que** le dispositif d'actionnement (10) est adjoint directement à la roulette (6, 7, 8, 9) pour le déclenchement et/ou la suppression du blocage par frein et/ou le blocage directionnel de la roulette (6, 7, 8, 9) et/ou le dispositif d'actionnement (10) est un levier (36) actionnable au pied avec un bras de levier (35) faisant saillie librement pour l'actionnement au pied, le dispositif d'actionnement (10) étant fixe en ce qui concerne la possibilité de pivotement par rapport à la roue de roulement (13) lorsque la roulette (6, 7, 8, 9) est réalisée sous la forme d'une roulette (6, 7, 8, 9) pouvant pivoter autour d'un axe de pivotement vertical (x).

9. Roulettes selon l'une des revendications 4 à 8, **caractérisées en ce que** la tige de commande (11, 27) est reliée de manière fixe en rotation au dispositif d'actionnement (10) adjoint à la roulette (6, 7, 8, 9), en formant un axe de pivotement (z) des dispositifs d'actionnement (10) en forme de leviers.

10. Roulettes selon l'une des revendications 8 ou 9, **caractérisées en ce que** la tige de commande (11, 27) agit directement sur le bras de levier (35) du dispositif d'actionnement (10).

11. Roulettes selon l'une des revendications 8 à 10, **caractérisées en ce que** le bras de levier (35) est lié par serrage avec la tige de commande (11, 27).

12. Chariot mobile (1) avec deux paires de roulettes (4, 5), dont la première paire de roulettes (4) est agencée à l'avant dans la direction de déplacement habituelle (r) du chariot mobile (1) et la deuxième paire de roulettes (5) est agencée à l'arrière, dans lequel en outre la première paire de roulettes (4) est réalisée sous la forme d'une paire de roulettes pouvant être bloquée par frein et les roulettes (6, 7) pouvant être bloquée par frein de la première paire de roulettes (4) sont reliées par une première tige de commande commune (11) et les roulettes (8, 9) de la deuxième paire de roulettes (5) sont reliées par une deuxième tige de commande commune (27), dans lequel il est possible d'agir sur les deux paires de roulettes (4, 5) séparément l'une de l'autre au moyen de pièces d'actionnement (16, 17) présentant chacune une surface d'actionnement libre (18, 19) et dans lequel en outre les deux surfaces d'actionnement (18, 19) sont agencées dans la région de la première paire de roulettes (4), **caractérisé en ce que** les roulettes (8, 9) de la deuxième paire de roulettes (5) peuvent, par rapport à une direction de marche, être bloquées dans un agencement qui peut pivoter autour d'un axe de pivotement vertical dans l'état d'utilisation habituel, **en ce que** le chariot mobile (1) présente une barre de liaison (3) agencée de manière articulée au chariot mobile (1) pour l'accouplement par exemple à un chariot de traction, **en ce que** la barre de liaison (3) peut être déplacée autour d'un axe de rotation (y) entre une position abaissée et une position relevée et **en ce que** le blocage par frein de la première paire de rouleaux (4) est supprimé et la direction de déplacement de la deuxième paire de rouleaux (5) est bloquée par un abaissement de la barre de liaison (3) dans la position d'accouplement.

13. Chariot mobile selon la revendication 12, **caractérisé en ce que** la barre de liaison (3) est formée pour agir sur une ou les deux surfaces d'actionnement (18, 19) au cours d'un mouvement de la barre de liaison (3) de la position relevée à la position abaissée.

14. Chariot mobile selon l'une des revendications 12 ou 13, **caractérisé en ce que** la barre de liaison (3) est précontrainte dans sa position relevée au moyen d'un ressort à pression de gaz (44), dans lequel, de préférence, le ressort à pression de gaz (44) est articulé à une extrémité sur un châssis (2) du chariot mobile (1) et à l'autre extrémité sur la barre de liaison (3) et/ou l'articulation sur la barre de liaison (3) se fait sur un prolongement de levier (47) situé à l'opposé par rapport à l'axe de rotation (y) de la barre de liaison (3)

15. Chariot mobile selon l'une des revendications 12 à 14, **caractérisé en ce qu'**une roulette motorisée (49) est adjointe au chariot mobile (1), dans lequel la roulette motorisée (49) peut être soulevée.
